# EUROPEAN PATENT SPECIFICATION

(11) **EP 3 228 565 B1**
(45) Date of publication and mention of the grant of the patent: **14.08.2019**
(21) Application number: 17163591.5
(22) Date of filing: 29.03.2017
(51) Int. Cl.: B65G 23/44, B65G 43/08, B65G 47/252, B65G 23/19, B65G 21/20

(54) **INVERSION DEVICE**
INVERSIONSVORRICHTUNG
DISPOSITIF D'INVERSION

(30) Priority: 07.04.2016 JP 2016077465
(43) Date of publication of application: 11.10.2017
(73) Proprietor: Toyo Jidoki Co., Ltd., Tokyo (JP)
(72) Inventor: TSUTSUI, Shoji, Iwakuni-shi, Yamaguchi (JP); NAKAGAWA, Atsuo, Iwakuni-shi, Yamaguchi (JP)
(74) Representative: Grünecker Patent- und Rechtsanwälte PartG mbB

(56) References cited:
- EP-A1- 0 159 542
- EP-A1- 1 975 092
- DE-A1- 19 711 761
- GB-A- 1 042 399

## Description

### TECHNICAL FIELD

The present invention relates to an inversion device that inverts front and back sides of a packaging bag while transferring the packaging bag.

### BACKGROUND ART

A packaging bag after undergoing a packaging process by a bagging packaging machine (i.e. packaging product bag) successively undergoes printing inspection (e.g., inspection of a production date, a best-before date, a lot number, etc. printed by the bagging packaging machine on the bag by means of visual inspection or by an image processing inspection device) and a box packing process.

When the packaging bag undergoes these processes, the front surface and the back surface of the packaging bag have to be oriented in prescribed directions. For example, when the printing inspection is performed, the packaging bag's surface that has been printed on has to be facing upward. When the box packing process is performed, the front surface of the packaging bag has to be facing upward.

However, the front and back surfaces of a packaging bag discharged from the bagging packaging machine and transferred can be oriented in directions opposite to the desired directions due to a discharge structure for discharging the packaging bag from the bagging packaging machine or a sterilization process or the like performed before the printing inspection or the box packing process.

In such cases, the packaging bag has to be inverted (turned over) so as to make the front and back surfaces oriented in the desired directions. From the viewpoint of restraining the decline in productivity, it is desirable to carry out such inversion of a packaging bag while transferring the packaging bag.

Further, packaging bags are generally soft and vulnerable and the overall size (in particular, thickness) of a packaging bag varies depending on the type of the product therein. Furthermore, there are cases where two or more packaging bags partially overlap one above another in a step before the packaging bag inversion process and are transferred to the inversion processing step in such an overlapping state. Therefore, the packaging bag inversion process is desired to be carried out in consideration of these situations.

Japanese patent application publication No. 2000-118695 discloses a front-back inversion device for inverting the front and back sides of a woody plate-like body. In this front-back inversion device, an endless guide belt (guide means) is supported so as to extend partially along a terminal part (inversion part) of a conveyer transferring an article in a horizontal direction, while a conveyer for receiving the article after the inversion is arranged under the transfer conveyer. The front-back inversion device inverts an article in the terminal part (inversion part) while holding the article between the conveyer and the guide belt in the terminal part (inversion part). The article after the inversion is passed on to the receiving conveyer and transferred to the downstream side.

Incidentally, Japanese patent application publication No. 2000-118695 also discloses a feature capable of adjusting the position of a third roller in an elongate hole so that appropriate tension is applied to the guide belt.

Document DE 197 11 761 A1 discloses an inversion device according to the preamble of claim 1.

### SUMMARY OF INVENTION

### Technical Problem

However, the front-back inversion device disclosed in Japanese patent application publication No. 2000-118695 has the following problems.

Prescribed tension is applied to the guide belt (guide means) of the front-back inversion device of Japanese patent application publication No. 2000-118695, but the tension is invariably constant unless it is readjusted. On the other hand, when there is a change in the type of the packaging bag and a packaging bag having a different thickness is inverted, conditions required of the inversion part, such as holding force, also change. Thus, the following problems can arise. For example, when a thin packaging bag is inverted, the holding force can become insufficient and the posture of the packaging bag can be disturbed in the inversion part. Conversely, when a thick packaging bag is inverted, the holding force can become excessive and the packaging bag can be ruptured.

To resolve these problems in the front-back inversion device of Japanese patent application publication No. 2000-118695, the tension of the guide belt has to be readjusted by human hands each time there is a change in the size (in particular, thickness) of the packaging bag. Accordingly, the adjustment work is necessitated to be complicated and troublesome and the productivity drops in the front-back inversion device of Japanese patent application publication No. 2000-118695. Similar problems are also encountered by the inversion device described in document DE 197 11 761 A1.

Further, in the case where two or more packaging bags partially overlap one above another in a step before the inversion process and are transferred to the inversion part in such an overlapping state, the packaging bags might get jammed at the inlet of the inversion part. In such cases where packaging bags are jammed at the inlet of the inversion part, the packaging bags can not only rupture but also obstruct the inversion process of a packaging bag subsequently supplied thereto. Thus, it is necessary in such cases to stop at least the whole of the packaging equipment on the upstream side, thereafter remove the jammed packaging bags, and thereafter restart the device. Consequently, the productivity drops significantly.

The present invention has been contrived in light of the above-mentioned circumstances, and an object thereof is to provide an inversion device capable of inverting (turning over) a packaging bag in a reliable and stable manner. An object of the present invention is to provide an inversion device capable of continuing the reliable and stable packaging bag inversion process without dropping the productivity, even when there is a change in the thickness of the packaging bag as the object of transfer for example. Further, an object of the present invention is to provide an inversion device capable of performing the reliable and stable packaging bag inversion process without causing the rupture of a packaging bag or the decline in the productivity even in cases where two or more packaging bags partially overlap one above another in a step before the inversion process and are transferred to the position for the inversion process in such an overlapping state. Solution to Problem

The present invention is directed to an inversion device according to claim 1.

The inversion device comprises: a status detection sensor that detects status of the packaging bag being transferred in the inversion section or in a section before the inversion section; a roller position adjustment mechanism that adjusts positions of the first inversion part roller and the second inversion part roller; and a transfer control unit that controls the roller position adjustment mechanism according to detection result of the status detection sensor so as to adjust the positions of the first inversion part roller and the second inversion part roller in such a manner that a relative position between the supply belt and the holding belt in the inversion section is adjusted, wherein: when the detection result of the status detection sensor indicates normality, the transfer control unit controls the roller position adjustment mechanism in such a manner that the holding belt is placed relatively close to the supply belt in the inversion section, and when the detection result of the status detection sensor indicates abnormality, the transfer control unit controls the roller position adjustment mechanism in such a manner that the holding belt is placed relatively distant from the supply belt in the inversion section.

Desirably, the status detection sensor is a sensor that senses the packaging bag to detect overlapping status of the packaging bag.

Desirably, the arrangement position of the pressing unit changes according to thickness of one or a plurality of the packaging bags sandwiched and held by the supply belt and the holding belt in the inversion section, and the status detection sensor is a sensor that detects the arrangement position of the pressing unit to detect overlapping status of the packaging bag.

Desirably, the inversion device further comprises a belt speed control unit that determines traveling speed of the holding belt according to traveling speed of the supply belt and thickness of the packaging bag, wherein: the transfer holding unit includes a holding belt drive unit that causes the holding belt to travel, and the belt speed control unit controls the holding belt drive unit so as to cause the holding belt to travel at the determined traveling speed.

Desirably, the supply unit includes a transfer pulley that rotates while holding the supply belt, the transfer pulley includes a negative pressure chamber and an outer circumferential surface part that supports the supply belt at least in the inversion section, and has a plurality of pulley openings communicating with the negative pressure chamber, and the supply belt has one or more belt openings that communicating with the pulley openings in the inversion section.

Desirably, the supply unit includes a transfer pulley that rotates while holding the supply belt, the transfer pulley includes a negative pressure chamber and an outer circumferential surface part that supports the supply belt at least in the inversion section, and has a plurality of pulley openings communicating with the negative pressure chamber, the supply belt is formed of a plurality of members arranged separate from each other, and each of the pulley openings is arranged between adjoining ones of the members forming the supply belt.

Desirably, a section where the outer circumferential surface part of the transfer pulley travels includes a supporting section where the outer circumferential surface part supports the supply belt and a non-supporting section where the outer circumferential surface part does not support the supply belt, and a cover member is provided in such a manner that the cover member covers the outer circumferential surface part of the transfer pulley in at least a part of the non-supporting section so as to limit ventilation through the pulley openings.

According to the present invention, the tension of a holding belt is adjusted by a tension adjustment unit including a movable pressing unit that determines the tension of the holding belt according to the arrangement position of the pressing unit and a biasing unit that biases the pressing unit in a direction for increasing the tension of the holding belt. Therefore, packaging bags that can have various thicknesses can be inverted in a reliable and stable manner.

### BRIEF DESCRIPTION OF DRAWINGS

Fig. 1 is a schematic diagram showing a cross-sectional configuration of a principle part of an inversion device according to a first embodiment related to an inversion process, and showing a state before a packaging bag is held by a supply belt and a holding belt in an inversion section.
Fig. 2 is a schematic diagram showing a cross-sectional configuration of the principle part of the inversion device according to the first embodiment related to the inversion process, and showing a state in which the packaging bag is held by the supply belt and the holding belt in the inversion section.
Fig. 3 is a schematic diagram showing a cross-sectional configuration of the principle part of the inversion device according to the first embodiment related to the inversion process, and showing an example of a mechanism for detecting the overlap of packaging bags.
Fig. 4 is a diagram showing an example of a side-view configuration of the inversion device according to the first embodiment, and showing a state when detection result of a status detection sensor indicates a normal state.
Fig. 5 is a diagram showing an example of the side-view configuration of the inversion device according to the first embodiment, and showing a state when the detection result of the status detection sensor indicates an abnormal state.
Fig. 6 is a functional block diagram of a control panel.
Fig. 7 is a diagram showing an example of the side-view configuration of an inversion device according to a second embodiment, and showing a state when the detection result of the status detection sensor indicates a normal state.
Fig. 8 is a schematic diagram showing a cross-sectional configuration of a principle part of an inversion device according to a third embodiment related to the inversion process, and showing a state in which the packaging bag is held by the supply belt and the holding belt in the inversion section.
Fig. 9 is a diagram showing a cross-sectional configuration of the transfer pulley along a cross-sectional line IX - IX shown in Fig. 8.
Fig. 10 is an enlarged cross-sectional view of a part indicated by the reference character "X" in Fig. 9.
Fig. 11 is a plan view showing a principle part of an inversion device according to a fourth embodiment related to the inversion process viewed from above.
Fig. 12 is a diagram showing a cross-sectional configuration of a transfer pulley shown in Fig. 11.
Fig. 13 is an enlarged cross-sectional view of a part indicated by the reference character "XIII" in Fig. 12.
Fig. 14 is a diagram showing an example of the side-view configuration of an inversion device according to a fifth embodiment, and showing a state when the detection result of the status detection sensor indicates a normal state.
Fig. 15 is a diagram showing an example of the side-view configuration of the inversion device according to the fifth embodiment, and showing a state when the detection result of the status detection sensor indicates an abnormal state.

### DESCRIPTION OF EMBODIMENTS

Referring now to the drawings, a description will be given in detail of preferred embodiments in accordance with the present invention. Terms "upstream" and "downstream" in the following description are defined with reference to the transfer direction of a packaging bag 11. The packaging bags 11 as the object of transfer does not necessarily have a fixed shape. A packaging bag 11 deforms relatively easily according to external force and the outer shape of a packaging bag 11 can change depending on its posture. The packaging bag 11 basically stores a solid, liquid and/or gas, but does not necessarily have to be in the state of storing a product or the like therein.

### First Embodiment

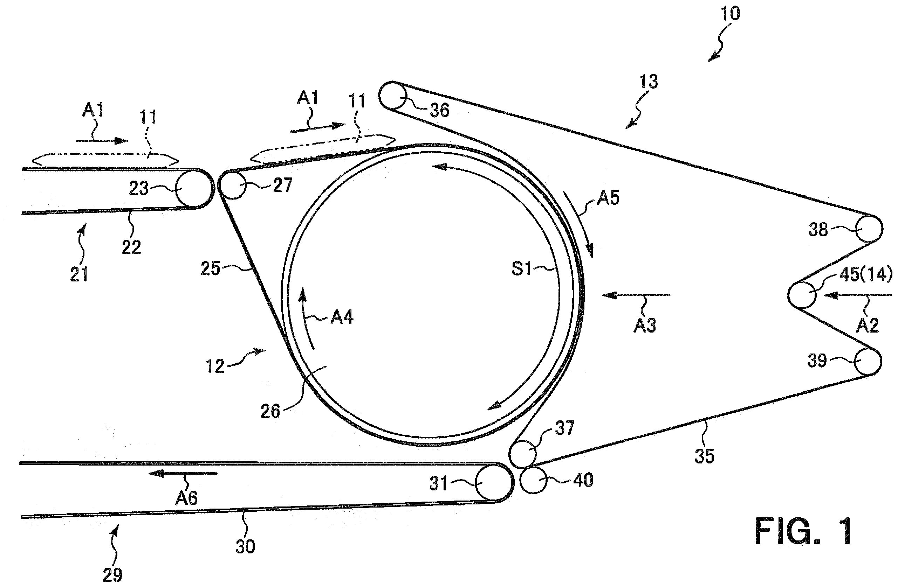

An inversion device 10 according to a first embodiment of the present invention will be described below referring to Figs. 1 to 6.

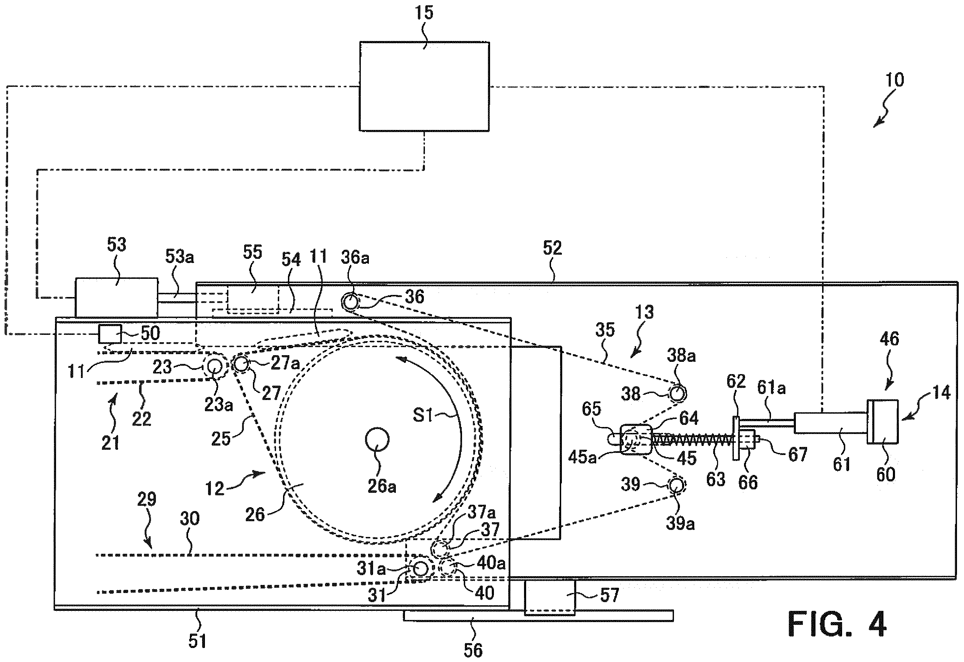

As shown in Fig. 1, the inversion device 10 of this embodiment includes a tension adjustment unit 14 that adjusts the tension of a holding belt 35 so that the holding belt 35 is pressed against a supply belt 25 in an inversion section S1. The tension adjustment unit 14 includes: a movable pressing unit 45 for pressing the holding belt 35; and a biasing unit 46 for biasing the pressing unit 45 (see Fig. 4, which will be explained later). The tension of the holding belt 35 varies depending on the arrangement position of the pressing unit 45. The pressing unit 45 is biased by the biasing unit 46 in a direction for increasing the tension of the holding belt 35.

With this inversion device 10, it is possible to properly transfer a packaging bag 11 while sandwiching the packaging bag 11 between the supply belt 25 and the holding belt 35 in the inversion section S1, and thus invert the front and back sides of the packaging bag 11 in a reliable and stable manner. Especially, by the movable pressing unit 45 and the biasing unit 46, the tension of the holding belt 35 is automatically adjusted according to the size and shape (in particular, thickness) of the packaging bag 11 and the magnitude of holding force acting on the packaging bag 11 from the supply belt 25 and the holding belt 35 is adjusted appropriately.

Therefore, even when there is a change in the thickness of the packaging bag 11, the tension of the holding belt 35 is automatically adjusted by the pressing unit 45 and the biasing unit 46 to an appropriate magnitude suitable for the thickness of the packaging bag 11 without impeding the transfer of the packaging bag 11. Even when two or more packaging bags 11 overlapping each other are transferred to the inversion section S1, the tension of the holding belt 35 is automatically adjusted to an appropriate magnitude suitable for the total thickness of the overlapping packaging bags 11. Thus, it is possible to appropriately hold, transfer and invert (turn over) packaging bags 11 having various thicknesses with the supply belt 25 and the holding belt 35 without causing damage to the packaging bags 11 (e.g., rupture, etc.) and a decrease in productivity. By automatically adjusting the holding force on an packaging bag 11 in the inversion section S1 to an appropriate magnitude suitable for the thickness of the packaging bag 11 as above, packaging bags 11 can be prevented from getting jammed in the vicinity of the inlet of the inversion section S1 and the inversion process of packaging bags 11 can be performed in a reliable and stable manner.

In the following, an example of a specific configuration of the above-described inversion device 10 will be described in more detail.

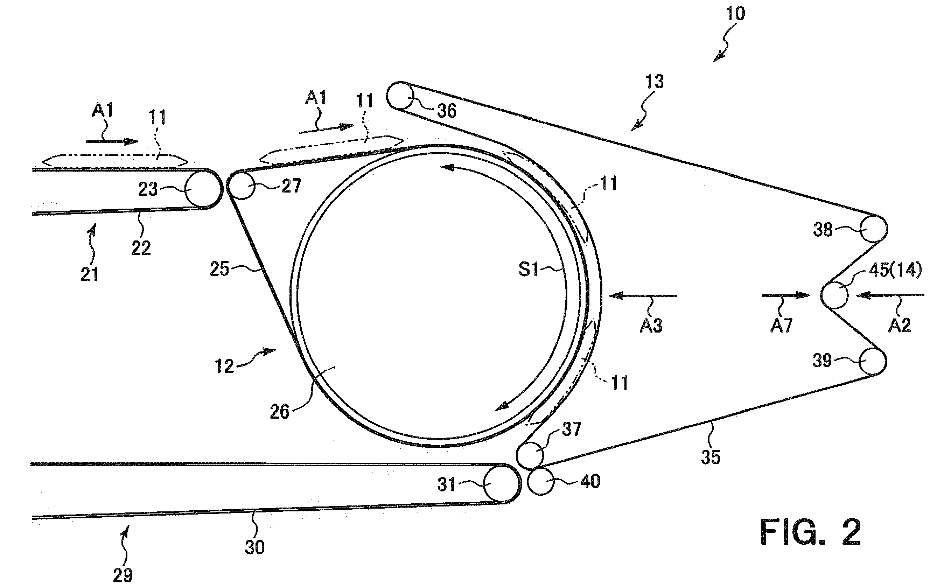

Fig. 1 is a schematic diagram showing a cross-sectional configuration of a principle part of the inversion device 10 according to the first embodiment related to the inversion process, and showing a state before the packaging bag 11 is held by the supply belt 25 and the holding belt 35 in the inversion section S1. Fig. 2 is a schematic diagram showing a cross-sectional configuration of the principle part of the inversion device 10 according to the first embodiment related to the inversion process, and showing a state in which the packaging bag 11 is held by the supply belt 25 and the holding belt 35 in the inversion section S1.

The reference characters "A1" and "A6" in the drawings represent transfer directions of the packaging bag 11, "A2" represents a biasing direction of the pressing unit 45 caused by the biasing unit 46, "A3" represents a biasing direction of the holding belt 35, "A4" represents a rotational direction of a transfer pulley 26, "A5" represents a traveling direction of the holding belt 35, "A7" represents a biasing direction of the pressing unit 45 caused by the holding belt 35, "A8" represents a withdrawal direction of an unloading unit 29, and "A9" represents a withdrawal direction of a transfer holding unit 13.

The inversion device 10 in this example is configured as a transferring front/back inversion device that inverts the front and back sides of a packaging bag 11 while transferring the packaging bag 11. The inversion device 10 includes a loading conveyer 21, a supply unit 12, the transfer holding unit 13 and the unloading unit 29.

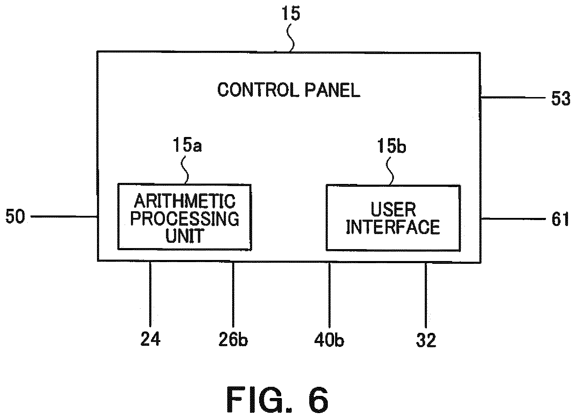

The loading conveyer 21, which is configured as a belt conveyer, receives a packaging bag 11 as the object of transfer from a device arranged in a stage before the inversion device 10, conveys the packaging bag 11, and supplies the packaging bag 11 to the supply unit 12. The loading conveyer 21 in this example includes: a plurality of rollers, such as a drive roller (unshown) arranged on the upstream side and a loading-side rotary roller 23 arranged on the downstream side; and a loading belt 22 formed of an endless belt supported (stretched) by the rollers (i.e., stretched across the rollers in a state with tension). The drive roller of the loading conveyer 21 is driven and rotated by a loading belt drive unit 24 (see Fig. 6) which will be explained later.

The loading belt 22 can be configured typically as a rubber grip belt by using a single flat belt or a plurality of band-like belts. The loading belt 22 is driven by the drive roller and transfers packaging bags 11 in a substantially horizontal direction. A packaging bag 11 put on the loading belt 22 is transferred towards the supply unit 12 and then passed on from the loading belt 22 to the supply belt 25 of the supply unit 12. The respective parts of the loading belt 22 supported by the drive roller and the loading-side rotary roller 23 constitute an arc-like inversion part. The loading belt 22 travels continuously while being inverted and switched into an inverse traveling direction at each inversion part.

Incidentally, although the loading belt 22 in this example is driven by the drive roller arranged on the upstream side of the loading-side rotary roller 23, it is also possible to configure the loading-side rotary roller 23 so as to drive the loading belt 22 to make the belt travel. The loading belt 22 may also be supported in the travelable state by the drive roller, the loading-side rotary roller 23 and one or more other rollers (i.e. by three or more rollers).

The supply unit 12 includes a plurality of rollers (in this example, a supply-side rotary roller 27 and the transfer pulley 26) and the supply belt 25 supported by (stretched across) these rollers. The supply belt 25 is formed of an integral web-like (cloth-like) endless belt. The supply-side rotary roller 27 and the transfer pulley 26 are arranged apart from each other. The supply belt 25, to which tension is applied from the supply-side rotary roller 27 and the transfer pulley 26, is stretched tightly with no slack. The transfer pulley 26 is driven via a supply belt drive unit 26b (see Fig. 6) which will be explained later and rotates while holding the supply belt 25. The supply belt 25 is driven by the transfer pulley 26 and travels continuously.

A section where the supply belt 25 travels includes a section where the supply belt 25 is supported by the supply-side rotary roller 27, a section where the supply belt 25 is supported by the transfer pulley 26, and a section where the supply belt 25 is supported by neither the supply-side rotary roller 27 nor the transfer pulley 26. A section where an outer circumferential surface part of the supply-side rotary roller 27 travels includes a supporting section where the outer circumferential surface part supports the supply belt 25 and a non-supporting section where the outer circumferential surface part does not support the supply belt 25. Similarly, a section where an outer circumferential surface part of the transfer pulley 26 travels includes a supporting section where the outer circumferential surface part supports the supply belt 25 and a non-supporting section where the outer circumferential surface part does not support the supply belt 25. The section where the supply belt 25 is supported by the transfer pulley 26 includes the inversion section S1 having an arc-like path. The supply belt 25 continuously travels together with a packaging bag 11 through a section between the supply-side rotary roller 27 and the transfer pulley 26 and the inversion section S1.

Incidentally, while the supply belt 25 in this example is driven by the transfer pulley 26 arranged on the downstream side, it is also possible to configure the supply-side rotary roller 27 to drive the supply belt 25 to make the belt travel. The supply belt 25 may also be supported in the travelable state by the supply-side rotary roller 27, the transfer pulley 26 and one or more other rollers (i.e. by three or more rollers).

The transfer holding unit 13 includes the holding belt 35 formed of an endless belt and a plurality of rollers supporting (stretching) the holding belt 35 in the travelable state. The holding belt 35 in this embodiment is formed of an integral web-like endless belt as a holding flat belt. The plurality of rollers include a first inversion part roller 36, a second inversion part roller 37, a first turnabout roller 38, a second turnabout roller 39 and a holding belt drive mechanism 40. The first inversion part roller 36, the second inversion part roller 37, the first turnabout roller 38 and the second turnabout roller 39 support the holding belt 35 in the travelable state from the back side of the holding belt 35. The holding belt drive mechanism 40 supports the holding belt 35 in the travelable state from the front side of the holding belt 35. The holding belt 35 is supported in the travelable state also by the transfer pulley 26 of the supply unit 12 in at least part of the inversion section S1. The transfer pulley 26 supports the holding belt 35 from the front side of the holding belt 35. The holding belt 35 is basically stretched tightly with no slack by the rollers and the transfer pulley 26. Especially in the inversion section S1, the holding belt 35 is biased towards the supply belt 25 and functions as a retainer belt for preventing a packaging bag 11 from falling off.

The first inversion part roller 36 is arranged on the inlet side of the inversion section S1, while the second inversion part roller 37 is arranged on the outlet side of the inversion section S1. At least a part of the holding belt 35 between the first inversion part roller 36 and the second inversion part roller 37 faces the supply belt 25 traveling in the inversion section S1. Put another way, in the inversion section S1, the holding belt 35 is arranged to extend along the transfer pulley 26 (the supply belt 25) and to be travelable while facing the supply belt 25. In the inversion section S1, a packaging bag 11 is pressed and held by the supply belt 25 and the holding belt 35 and is transferred in the state of being sandwiched between the supply belt 25 and the holding belt 35 traveling towards the downstream side.

The holding belt drive mechanism 40 supports the holding belt 35 by sandwiching the holding belt 35 between the holding belt drive mechanism 40 itself and the second inversion part roller 37, and is driven and rotated by a holding belt drive unit 40b (see Fig. 6) which will be explained later to make the holding belt 35 travel. Incidentally, while the holding belt 35 in this example travels by being driven by the holding belt drive mechanism 40 arranged on the downstream side, the holding belt drive mechanism 40 does not necessarily have to be rotationally driven. For example, it is also possible to provide the holding belt drive mechanism 40 to be freely rotatable and have the holding belt 35 driven by one or more other rollers supporting the holding belt 35 (i.e., the first inversion part roller 36, the second inversion part roller 37, the first turnabout roller 38 and/or the second turnabout roller 39) to travel. It is also possible to have the transfer pulley 26 drive the holding belt 35 via the supply belt 25 in the inversion section S1 to make the holding belt 35 travel.

The inversion device 10 of this embodiment is provided with the first turnabout roller 38 and the second turnabout roller 39. The first turnabout roller 38 is arranged on the upstream side of the pressing unit 45 of the tension adjustment unit 14, while the second turnabout roller 39 is arranged on the downstream side of the pressing unit 45. The tension of the holding belt 35 is determined by the relative position of the pressing unit 45 with respect to the first turnabout roller 38 and the second turnabout roller 39. Especially, by configuring the pressing unit 45 to press the holding belt 35 between the first turnabout roller 38 and the second turnabout roller 39 in a direction opposing the direction (i.e., pressing direction) in which the holding belt 35 is supported by the first turnabout roller 38 and the second turnabout roller 39 as in this embodiment, the installation space of the transfer holding unit 13 can be made compact.

The tension adjustment unit 14 functions as tension applying means that automatically adjusts the tension of the holding belt 35. The tension adjustment unit 14 includes: the movable pressing unit 45 for pressing the holding belt 35; and the biasing unit 46 (see Fig. 4) for biasing the pressing unit 45 in the direction which enables to increase the tension of the holding belt 35. The pressing unit 45 is provided to be movable relative to the holding belt 35. The pressing force applied from the pressing unit 45 to the holding belt 35 changes depending on an advance-withdraw position of the pressing unit 45. Incidentally, a traveling section of the holding belt 35 can be divided by the first and second inversion part rollers 36 and 37. With reference to the first and second inversion part rollers 36 and 37, the inversion section S1 is arranged in a section on one side, while the first turnabout roller 38, the second turnabout roller 39 and the pressing unit 45 are arranged in a section on the other side. Therefore, the pressing unit 45 biased by the biasing unit 46 presses a part of the holding belt 35 traveling in the section on the side opposite to the inversion section S1 across the first and second inversion part rollers 36 and 37. The pressing unit 45 receives force from the holding belt 35 according to the thickness of the one or more packaging bags 11 sandwiched and held by the supply belt 25 and the holding belt 35 in the inversion section S1 and the arrangement position of the pressing unit 45 is determined by the force. The biasing unit 46 biases the pressing unit 45 in such a manner that a part of the holding belt 35 situated between the first turnabout roller 38 and the second turnabout roller 39 is pressed by the pressing unit 45 towards the supply belt 25 and the inversion section S1. Accordingly, the tension of the whole of the holding belt 35 is adjusted and the holding belt 35 maintains the tight condition with no slack.

As above, the arrangement position of the pressing unit 45 is determined by the balance between "the force applied from the holding belt 35 to the pressing unit 45 according to the tension of the holding belt 35" and "the biasing force applied to the pressing unit 45 by the biasing unit 46." Accordingly, in the inversion section S1, the holding belt 35 is pressed against the supply belt 25, and the packaging bag 11 is held appropriately by the supply belt 25 and the holding belt 35.

The unloading unit 29 includes a plurality of rollers, such as an unloading roller 31 and a drive roller (unshown), and an unloading belt 30 formed of an endless belt supported by (stretched across) the rollers and capable of traveling continuously. The unloading belt 30 is arranged below the supply unit 12 (specifically, the supply belt 25) and the inversion section S1 in regard to the vertical direction. The unloading belt 30 receives a packaging bag 11 which is discharged from the inversion section S1 and drops due to gravity, and transfers the packaging bag 11 to a device arranged in a stage next to the inversion device 10. Incidentally, while the unloading belt 30 in this example is driven by the drive roller arranged on the downstream side, it is also possible to configure the unloading roller 31 to drive the unloading belt 30 to make the belt travel. The unloading belt 30 may also be supported in the travelable state by the unloading roller 31, the drive roller and one or more other rollers (i.e. by three or more rollers).

Next, the outline of the inversion process for a packaging bag 11 performed by the inversion device 10 of this embodiment will be described below.

The inversion process in the inversion device 10 includes a packaging bag supply step of transferring a packaging bag 11 towards the inversion section S1, a packaging bag inversion step of causing the supply belt 25 and the holding belt 35 to transfer the packaging bag 11 in the inversion section S1 to invert the front and back sides of the packaging bag 11, and a packaging bag unloading step of sending the packaging bag 11 after the inversion to the next stage. The packaging bag supply step is performed mainly by the loading conveyer 21 and the supply unit 12. The packaging bag inversion step is performed mainly by the supply unit 12. The packaging bag unloading step is performed mainly by the unloading unit 29.

Specifically, a packaging bag 11 passed on from the loading belt 22 of the loading conveyer 21 to the supply belt 25 of the supply unit 12 is transferred by the supply belt 25 and enters the inversion section S1 between the supply belt 25 and the holding belt 35. In the inversion section S1, the packaging bag 11 in the state of being sandwiched and supported by the supply belt 25 and the holding belt 35 is transferred basically without losing the posture. Then, the packaging bag 11 is discharged from the inversion section S1 towards the unloading belt 30 of the unloading unit 29 and is released from the support given by the supply belt 25 and the holding belt 35. The packaging bag 11 is put on the unloading belt 30 and transferred by the unloading belt 30 towards the device arranged in the stage next to the inversion device 10. Incidentally, packaging bags 11 may be fed from the loading belt 22 (the loading conveyer 21) towards the supply belt 25 (the supply unit 12) either discretely (intermittently) or continuously.

As explained above, a packaging bag 11 is transferred through the inversion section S1 while being pressed against the supply belt 25 by the holding belt 35, and the front and back sides of the packaging bag 11 are inverted. Specifically, since the inversion section S1 forms an arc-like path, the directions of front and back surfaces of the packaging bag 11 are inverted in regard to the vertical direction between before and after the packaging bag 11 passes through the inversion section S1. For example, the lower surface (back surface) of the packaging bag 11 which is in contact with the supply belt 25 before the packaging bag 11 enters the inversion section S1 becomes the upper surface (front surface) on the unloading belt 30 after the packaging bag 11 is discharged from the inversion section S1. Conversely, the upper surface (front surface) of the packaging bag 11 which is not in contact with the supply belt 25 before the packaging bag 11 enters the inversion section S1 becomes the lower surface (back surface) which is in contact with the unloading belt 30 after the packaging bag 11 is discharged from the inversion section S1 onto the unloading belt 30.

In the above sequence of steps of the inversion process, the pressing unit 45 is arranged to be movable and is biased by the biasing unit 46 in the direction for increasing the tension of the holding belt 35, and the arrangement position of the pressing unit 45 is determined according to the thickness of a packaging bag 11 sandwiched between the supply belt 25 and the holding belt 35. Therefore, the holding belt 35 maintains the tight condition with no slack irrespective of the presence/absence and the thickness of a packaging bag 11 between the supply belt 25 and the holding belt 35, and the holding belt 35 in the inversion section S1 is properly biased towards the supply belt 25 to an extent not impeding the traveling of the supply belt 25. For example, when no packaging bag 11 exists between the supply belt 25 and the holding belt 35 in the inversion section S1, the holding belt 35 travels together with the supply belt 25 while being in contact with the supply belt 25. In contrast, when a packaging bag 11 exists between the supply belt 25 and the holding belt 35 in the inversion section S1, the tension of the holding belt 35 increases and the pressing unit 45 moves in a direction (in this embodiment, in a direction of separating from the inversion section S1 (see the arrow "A7" in Fig. 2)) which opposes the direction in which the pressing unit 45 is biased by the biasing unit 46. Accordingly, the tension of the holding belt 35 is adjusted, the packaging bag 11 in the inversion section S1 is appropriately supported by the supply belt 25 and the holding belt 35 without receiving excessive pressing force from the supply belt 25 and the holding belt 35, and the holding belt 35 travels together with the supply belt 25 while being not in contact with the supply belt 25.

As above, when a packaging bag 11 enters the gap between the supply belt 25 and the holding belt 35 in the inversion section S1, the holding belt 35 is pressed by the packaging bag 11 and the tension of the holding belt 35 increases. However, the pressing unit 45 of the tension adjustment unit 14 moves in response to the increase in the tension of the holding belt 35 and thereby relaxes the tension of the holding belt 35. Accordingly, the tension of the holding belt 35 is automatically adjusted so as to prevent excessive pressing force being applied to the packaging bag 11 from the supply belt 25 and the holding belt 35, and the packaging bag 11 is supported appropriately due to appropriate pressing force (supporting force) continuously applied from the supply belt 25 and the holding belt 35.

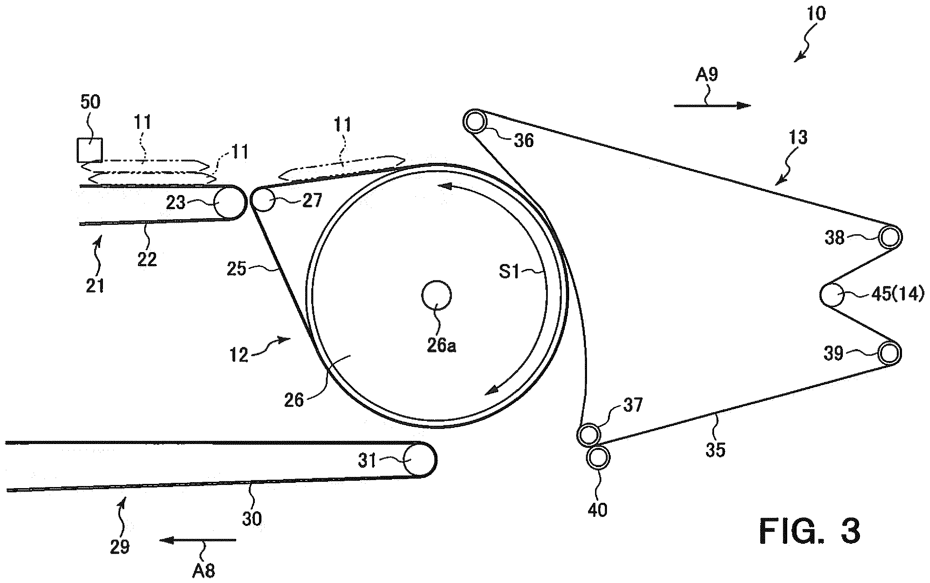

Fig. 3 is a schematic diagram showing a cross-sectional configuration of the principle part of the inversion device 10 according to the first embodiment related to the inversion process, and showing an example of a mechanism for detecting the overlap of packaging bags 11.

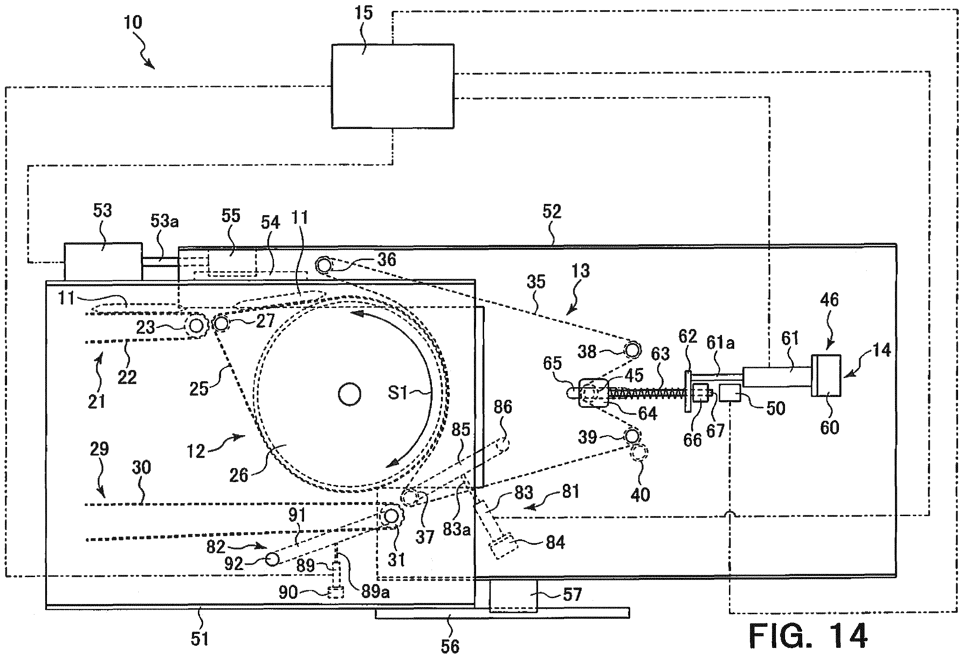

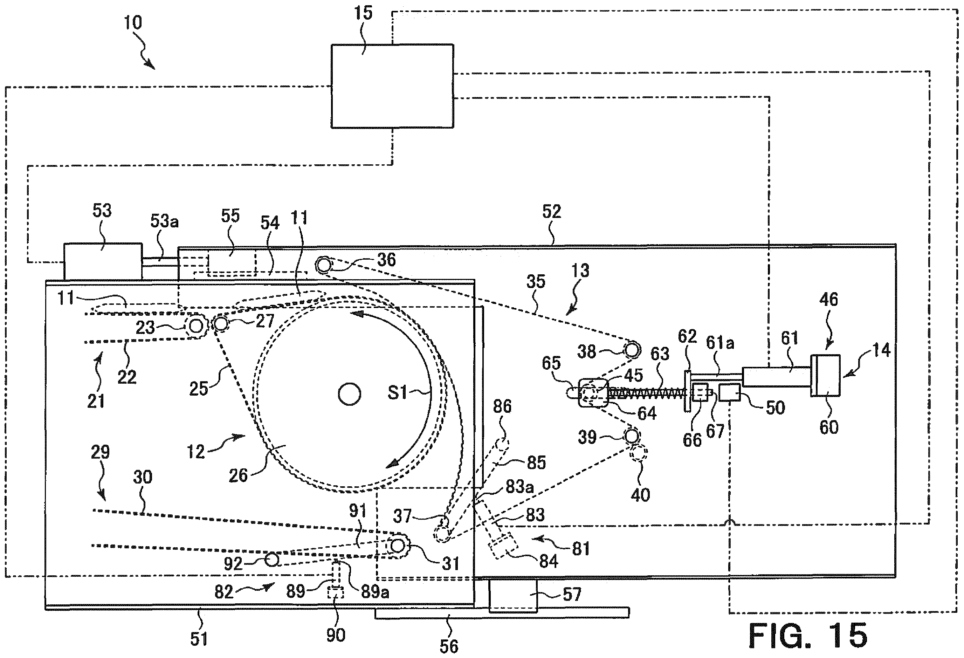

The inversion device 10 of this embodiment further includes a status detection sensor 50 that detects the overlapping status of packaging bags 11. The status detection sensor 50 shown in Fig. 3 senses packaging bags 11 transferred by the loading belt 22 to detect the overlapping status of packaging bags 11. The status detection sensor 50 in this embodiment is formed of a sensor detecting the status of packaging bags 11 transferred in a section where the loading belt 22 is arranged, that is, a section prior to the inversion section S1, as explained above, but the specific configuration of the status detection sensor 50 is not particularly limited. For example, as will be explained later (see Figs. 14 and 15), the status detection sensor 50 may also be formed of a sensor detecting the status of packaging bags 11 transferred in the inversion section S1.

In the example shown in Fig. 3, the status detection sensor 50 detecting the presence/absence of a packaging bag 11 is installed at a position (height) where the distance from the surface of the loading belt 22 is greater than the thickness of a single packaging bag 11. The status detection sensor 50 does not react to a single packaging bag 11 transferred by the loading belt 22 but reacts to conditions in which two or more packaging bags 11 in the overlapping state are transferred by the loading belt 22 and one of the packaging bags 11 passes through a position (height) corresponding to the installation position of the status detection sensor 50. Thus, when the status detection sensor 50 is not reacting, that means a normal detection result of the status detection sensor 50 indicating that a packaging bag 11 is being transferred without overlapping with any other packaging bags 11. In contrast, when the status detection sensor 50 is reacting, that means an abnormal detection result of the status detection sensor 50 indicating that two or more packaging bags 11 are being transferred in the overlapping state.

When the detection result of the status detection sensor 50 indicates normality, that is, indicates that the packaging bag 11 being transferred by the loading belt 22 is not overlapping with any other packaging bags 11, the holding belt 35 in the inversion section S1 is placed at a position relatively close to the supply belt 25 as shown in Figs. 1 and 2. In contrast, when the detection result of the status detection sensor 50 indicates abnormality, that is, indicates that two or more packaging bags 11 in the overlapping state are being transferred by the loading belt 22, the holding belt 35 in the inversion section S1 is placed at a position relatively apart from the supply belt 25 as shown in Fig. 3. Especially, the second inversion part roller 37 influencing the discharge direction of a packaging bag(s) 11 from the inversion section S1 is placed at a position apart from the unloading belt 30 of the unloading unit 29 (see Fig. 3), and the packaging bags 11 discharged from the inversion section S1 are sent to the outside of the unloading unit 29 (including unloading belt 30). The packaging bags 11 sent to the outside of the unloading unit 29 (unloading belt 30) may either be stored in an unshown container such as a basket or be received by another device, but are not transferred to the device in the next stage via the unloading belt 30.

In this case, it is also possible to separate the unloading unit 29 from the transfer holding unit 13 and the inversion section S1 while separating the transfer holding unit 13 (holding belt 35) from the supply unit 12 (supply belt 25) or without separating the transfer holding unit 13 (holding belt 35) from the supply unit 12 (supply belt 25). Namely, when the detection result of the status detection sensor 50 indicates abnormality, one or more components (e.g., the unloading belt 30, the unloading roller 31, etc.) of the unloading unit 29 may be moved (withdrawn) in a direction of separating from the transfer holding unit 13 (holding belt 35) and the inversion section S1 (see the withdrawal direction "A8" in Fig. 3). With this operation, packaging bags 11 entering the inversion section S1 in the overlapping state can be prevented from being transferred onto the unloading belt 30 and can be reliably prevented from being sent to the device in the next stage.

Next, a description will be given of an example of the overall configuration of the inversion device 10 for implementing the above-described inversion process configuration of the inversion device 10 shown in Figs. 1 to 3.

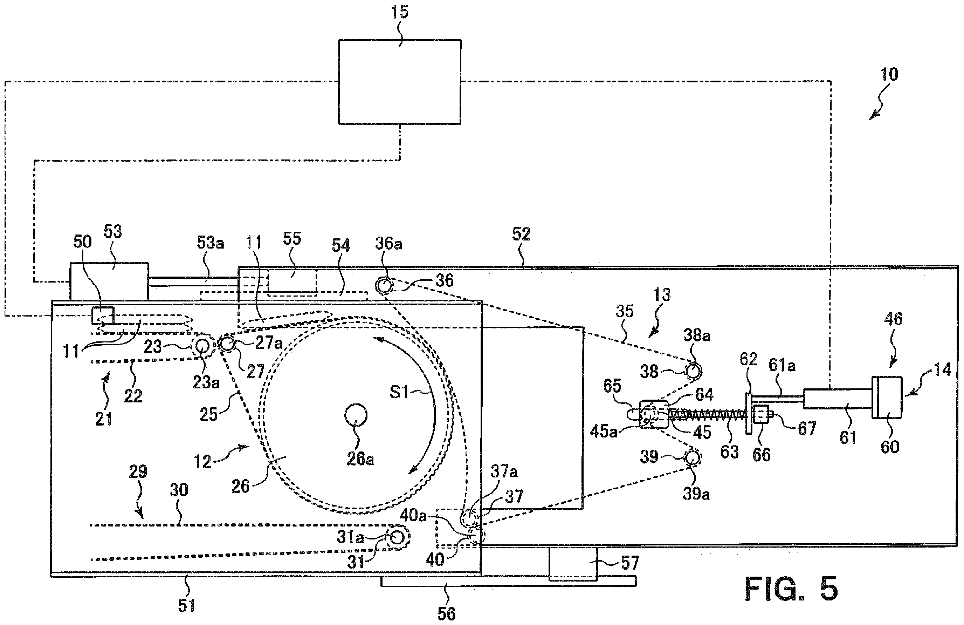

Figs. 4 and 5 are diagrams showing an example of a side-view configuration of the inversion device 10 according to the first embodiment, and showing an example of a moving mechanism applicable to the inversion device 10 of Figs. 1 to 3. Fig. 4 shows a state when the detection result of the status detection sensor 50 indicates normality. Fig. 5 shows a state when the detection result of the status detection sensor 50 indicates abnormality.

The inversion device 10 in this example includes: a first frame 51 that fixedly supports the loading conveyer 21, the supply unit 12 and the unloading unit 29; and a second frame 52 that fixedly supports the transfer holding unit 13 and the tension adjustment unit 14.

Each of the first frame 51 and the second frame 52 includes a top plate, a base plate, and a pair of side plates connected to the top plate and the base plate. The first frame 51 and the second frame 52 are arranged to be slidable to partially overlap each other. The first frame 51 and the second frame 52 are provided to be movable relative to each other. In this example, the first frame 51 is fixed to an unshown support and the position of the first frame 51 is basically invariable, whereas the position of the second frame 52 is variable.

A central shaft part 23a of the loading-side rotary roller 23, a central shaft part 27a of the supply-side rotary roller 27, a central shaft part 26a of the transfer pulley 26, and a central shaft part 31a of the unloading roller 31 are rotatably connected to the side plates of the first frame 51. Both ends of each of the central shaft parts 23a, 27a, 26a, 31a of the loading-side rotary roller 23, the supply-side rotary roller 27, the transfer pulley 26 and the unloading roller 31 are supported rotatably by the side plates of the first frame 51. The loading conveyer 21, the supply unit 12 and the unloading unit 29 which include these components are arranged mainly inside the first frame 51, that is, in a space surrounded by the top plate, the base plate and the pair of side plates of the first frame 51. The aforementioned status detection sensor 50 is also arranged inside the first frame 51 and fixedly attached to at least one of the side plates of the first frame 51.

The loading-side rotary roller 23, the supply-side rotary roller 27, the transfer pulley 26, the unloading roller 31 and the status detection sensor 50 are fixedly supported by the first frame 51 as above, and move integrally with the first frame 51 at times of translational movement of the first frame 51. However, since the position of the first frame 51 is basically invariable in the example shown in Fig. 4, the positions of the loading conveyer 21, the supply unit 12, the unloading unit 29 and the status detection sensor 50 are also basically invariable.

On the other hand, a central shaft part 36a of the first inversion part roller 36, a central shaft part 37a of the second inversion part roller 37, a central shaft part 38a of the first turnabout roller 38, a central shaft part 39a of the second turnabout roller 39, a central shaft part 40a of the holding belt drive mechanism 40, and a central shaft part 45a of the pressing unit 45 are rotatably connected to the side plates of the second frame 52. Both ends of each of the central shaft parts 36a, 37a, 38a, 39a, 40a, 45a of the first inversion part roller 36, the second inversion part roller 37, the first turnabout roller 38, the second turnabout roller 39, the holding belt drive mechanism 40 and the pressing unit 45 are supported rotatably by the side plates of the second frame 52.

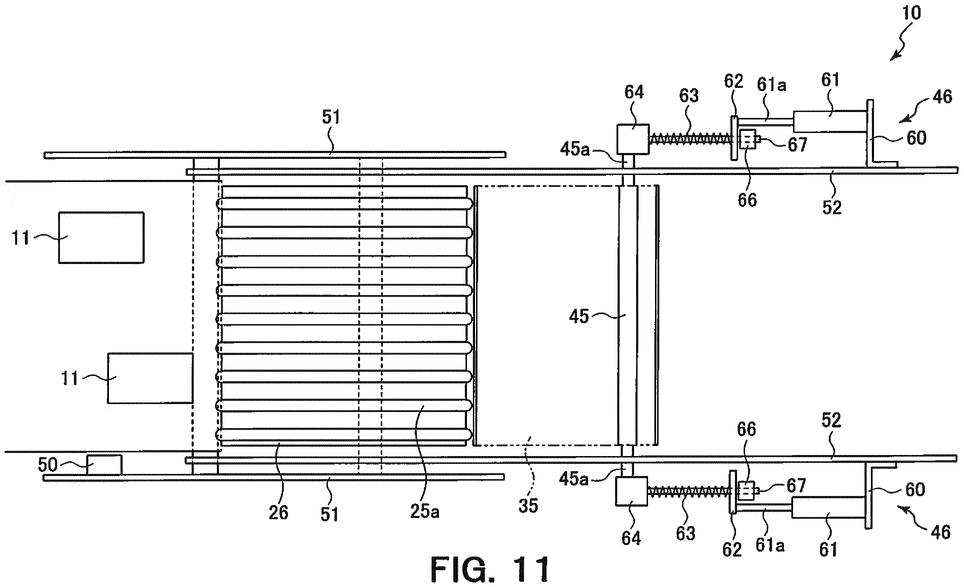

The transfer holding unit 13 (including the first inversion part roller 36, the second inversion part roller 37, the first turnabout roller 38, the second turnabout roller 39 and the holding belt 35) is arranged mainly inside the second frame 52, that is, in a space surrounded by the top plate, the base plate and the pair of side plates of the second frame 52. In contrast, the central shaft part 45a of the pressing unit 45 is provided to penetrate the side plates of the second frame 52, and thus a central part of the central shaft part 45a is arranged inside the second frame 52 whereas both ends of the central shaft part 45a are arranged outside the second frame 52 (see Fig. 11). Specifically, an elongated hole 65 is formed through each side plate of the second frame 52, and the central shaft part 45a of the pressing unit 45 penetrates the elongate holes 65 of the side plates. The elongate holes 65 extend in the direction of arrangement of the transfer pulley 26 and the pressing unit 45 (horizontal direction in Fig. 4) and guide the movement of the central shaft part 45a of the pressing unit 45. The pressing unit 45 guided by the elongate holes 65 is provided to be slidable along the elongate holes 65, and thus the relative position of the pressing unit 45 with respect to the transfer pulley 26 and the inversion section S1 is variable.

Two biasing units 46 are provided in the tension adjustment unit 14. Each of biasing units 46 is attached to its corresponding side plate of the second frame 52 to be arranged outside the second frame 52 (see Fig. 11). In this example, a second air cylinder 61, a pad plate 62, a compression spring 63, a stopper 66 and an adjustment shaft 67 included in each of biasing units 46 are fixed to the corresponding side plate of the second frame 52 via an L-shaped bracket 60.

A block 64 is connected to each end of the central shaft part 45a of the pressing unit 45. To each block 64, one end of the adjustment shaft 67 is connected. The stopper 66 is fixedly attached to the other end of the adjustment shaft 67. The pad plate 62 is arranged between the block 64 and the stopper 66. The compression spring 63 is arranged between the block 64 and the pad plate 62. The adjustment shaft 67 penetrates a through hole (unshown) formed through the pad plate 62 while also penetrating the compression spring 63. The pad plate 62 is fixed to the tip end of a cylinder shaft 61a of the second air cylinder 61 and is placed at a position corresponding to the length of protrusion of the cylinder shaft 61a from a main body part of the second air cylinder 61. The main body part of the second air cylinder 61, holding the cylinder shaft 61a to be able to advance and withdraw, is fixed to the bracket 60.

The compression spring 63 in the compressed state, with its ends contacting the pressing unit 45 (block 64) and the pad plate 62, functions as a biasing member for biasing the pressing unit 45 via the block 64 towards the transfer pulley 26 and the inversion section S1. Incidentally, if the protrusion length of the cylinder shaft 61a from the main body of the second air cylinder 61 is reduced, the pad plate 62 makes contact with the stopper 66, presses the stopper 66, and thereby moves the adjustment shaft 67, the block 64 and the pressing unit 45 in the direction of separating from the transfer pulley 26 and the inversion section S1. By this operation, the compressive force on the compression spring 63 is relaxed, the pressing force of the pressing unit 45 on the holding belt 35 is weakened, and the tension of the holding belt 35 is also relaxed. Incidentally, when the protrusion length of the cylinder shaft 61a of the second air cylinder 61 is reduced to the minimum, the pressing unit 45 may be arranged at a position where the pressing unit 45 does not press on the holding belt 35.

As above, the transfer holding unit 13 (including the first inversion part roller 36, the second inversion part roller 37, the first turnabout roller 38, the second turnabout roller 39 and the holding belt drive mechanism 40) and the tension adjustment unit 14 (including the pressing unit 45 and the biasing unit 46) are supported to be stationary with respect to the second frame 52 and move integrally with the second frame 52 at times of translational movement of the second frame 52.

A first air cylinder 53 is fixed on an outer surface (top surface) of the top plate of the first frame 51. A first sliding member 55 fixed to an inner surface of the top plate of the second frame 52 is attached to the tip end of the cylinder shaft 53a of the first air cylinder 53 which is capable of advancing and withdrawing. A first rail 54 is also fixed on the outer surface of the top plate of the first frame 51. The first sliding member 55 slidably engages with the first rail 54, and the first rail 54 guides the sliding movement of the first sliding member 55. Further, a second rail 56 is fixed to an outer surface of the base plate of the first frame 51, and a second sliding member 57 is fixed to an outer surface of the base plate of the second frame 52. The second sliding member 57 slidably engages with the second rail 56, and the second rail 56 guides the sliding movement of the second sliding member 57.

As above, in this example, a roller position adjustment mechanism for adjusting relative positions of the first inversion part roller 36 and the second inversion part roller 37 with respect to the supply belt 25 and the inversion section S1 is formed by the combination of the first frame 51, the second frame 52, the first air cylinder 53, the first rail 54, the first sliding member 55, the second rail 56 and the second sliding member 57. This roller position adjustment mechanism is controlled by a transfer control unit. In the example shown in Fig. 4, a control panel 15 functions as such a transfer control unit.

Specifically, the inversion device 10 includes the control panel 15 connected to the status detection sensor 50, the first air cylinder 53 and the second air cylinder 61, and the control panel 15 controls the first air cylinder 53 and the second air cylinder 61. The control panel 15 controls the roller position adjustment mechanism (mainly, the first air cylinder 53) based on the detection result of the status detection sensor 50 and thereby adjusts the positions of the first inversion part roller 36 and the second inversion part roller 37 so as to adjust the relative position between the holding belt 35 and the supply belt 25 in the inversion section S1.

For example, when the detection result (detection signal) of the status detection sensor 50 indicates normality (i.e., indicates that a packaging bag 11 is being transferred without overlapping with any other packaging bags 11), the control panel 15 controls the roller position adjustment mechanism so that the holding belt 35 is placed relatively close to the supply belt 25 in the inversion section S1 as shown in Fig. 4. Specifically, the control panel 15 controls the first air cylinder 53 and thereby sets the protrusion length of the cylinder shaft 53a from the main body of the first air cylinder 53 at a standard length. By this control, the first sliding member 55 and the main body of the first air cylinder 53 are placed at positions a prescribed distance apart from each other, the relative position between the first frame 51 and the second frame 52 is also set at a standard position, and the holding belt 35 in the inversion section S1 is placed at a position close to the supply belt 25 (see Fig. 4). Incidentally, the transfer holding unit 13 and the tension adjustment unit 14 attached to the second frame 52 are arranged at positions (holding positions) close to the loading conveyer 21, the supply unit 12 and the unloading unit 29 attached to the first frame 51.

Therefore, packaging bags 11 passing through the inversion section S1 one by one in the normal state without overlapping with any other packaging bags 11 are put on the unloading belt 30 after being discharged from the inversion section S1 and are transferred towards the next stage. Incidentally, the standard length of the cylinder shaft 53a protruding from the main body of the first air cylinder 53 may be variable and may be set according to a standard thickness of the packaging bag 11.

In contrast, when the detection result (detection signal) of the status detection sensor 50 indicates abnormality (i.e., indicates that two or more packaging bags 11 are being transferred in the overlapping state), the control panel 15 controls the roller position adjustment mechanism so that the holding belt 35 is placed relatively apart from the supply belt 25 in the inversion section S1 as shown in Fig. 5. Specifically, the control panel 15 controls the first air cylinder 53 and thereby sets the protrusion length of the cylinder shaft 53a from the main body of the first air cylinder 53 longer than the standard length. By this control, the first sliding member 55 moves in a direction of getting away from (i.e., being distanced from) the main body of the first air cylinder 53, by which the first frame 51 and the second frame 52 are placed at positions relatively apart from each other. Thus, the supply unit 12 and the transfer holding unit 13 separate from each other and the holding belt 35 in the inversion section S1 is placed at a position apart from the supply belt 25 (see Fig. 5). Accordingly, the transfer holding unit 13 and the tension adjustment unit 14 attached to the second frame 52 are arranged at positions (withdrawn positions) apart from the loading conveyer 21, the supply unit 12 and the unloading unit 29 attached to the first frame 51.

Therefore, two or more packaging bags 11 passing through the inversion section S1 in the overlapping state drop towards the outside of the unloading belt 30 without being sent onto the unloading belt 30, and are discharged to the outside of the unloading belt 30 (unloading unit 29). After the packaging bags 11 in the overlapping state are discharged from the inversion section S1, the protrusion length of the cylinder shaft 53a from the main body of the first air cylinder 53 is returned to the standard length, and the second frame 52 and the transfer holding unit 13 and the tension adjustment unit 14 attached to the second frame 52 are returned to the original positions (standard positions) shown in Fig. 4.

Incidentally, the control panel 15 functions not only as the above-described transfer control unit but also as a belt speed control unit that determines the traveling speed of the holding belt 35.

Fig. 6 is a functional block diagram of the control panel 15. The control panel 15, including an arithmetic processing unit 15a and a user interface 15b, is connected to the status detection sensor 50, the first air cylinder 53 and the second air cylinder 61, and also to the loading belt drive unit 24, the supply belt drive unit 26b, the holding belt drive unit 40b and an unloading belt drive unit 32. The loading belt drive unit 24, constituting a part of the loading conveyer 21, rotates the drive roller arranged on the upstream side of the loading conveyer 21 and thereby makes the loading belt 22 travel. The supply belt drive unit 26b, constituting a part of the supply unit 12, rotates the transfer pulley 26 and thereby makes the supply belt 25 travel. The holding belt drive unit 40b, constituting a part of the transfer holding unit 13, rotates the holding belt drive mechanism 40 and thereby makes the holding belt 35 travel. The unloading belt drive unit 32, constituting a part of the unloading unit 29, rotates the drive roller arranged on the downstream side of the unloading unit 29 and thereby makes the unloading belt 30 travel.

The user can input data regarding the traveling speed of the supply belt 25 and/or the thickness of the packaging bag 11, via the user interface 15b. The data inputted to the user interface 15b is sent to the arithmetic processing unit 15a. The arithmetic processing unit 15a determines the traveling speed of the holding belt 35 based on the data sent from the user interface 15b. The control panel 15 controls the holding belt drive unit 40b and thereby makes the holding belt 35 travel at the determined traveling speed.

Incidentally, the control panel 15 may determine the traveling speed of the holding belt 35 in consideration of another factor in addition to "the traveling speed of the supply belt 25" and "the thickness of the packaging bag 11." The control panel 15 may acquire the factors like "the traveling speed of the supply belt 25" and "the thickness of the packaging bag 11" either via the user interface 15b or from result of detection by sensors provided separately.

As described above, according to the inversion device 10 of this embodiment, even when there is a change in the thickness of the packaging bag 11, the tension of the holding belt 35 and the biasing force applied from the biasing unit 46 to the pressing unit 45 balance with each other properly according to the thickness of the packaging bag 11. Accordingly, the pressing unit 45 moves to an appropriate position against the biasing force of the biasing unit 46, and the tension of the holding belt 35, that is, the holding force of the holding belt 35 and the supply belt 25 in the inversion section S1 for holding the packaging bag 11, is adjusted appropriately. Consequently, "special adjustment work for the supply belt 25", which has been necessary in cases of conventional inversion devices, becomes unnecessary and the complication of work and the decrease in productivity can be prevented.

Further, even when two or more packaging bags 11 partially overlap one above another in a step before the inversion process and are transferred to the inversion section S1 in such a state, the overlapping state of the packaging bags 11 is detected by the status detection sensor 50 before the packaging bags 11 are inverted. The transfer holding unit 13 and the tension adjustment unit 14 are moved to the withdrawn positions based on the detection signal from the status detection sensor 50. Accordingly, the packaging bags 11 in the overlapping state can reliably be prevented from being pressed excessively and ruptured by the supply belt 25 and the holding belt 35. Further, the inversion process for another packaging bag 11 loaded next is not obstructed. As a result, "the stoppage of the whole of the packaging equipment," which has been necessary in cases of conventional inversion devices, becomes unnecessary and the decrease in productivity does not occur either.

Furthermore, the arc-like paths of the supply belt 25 and the holding belt 35 in the inversion section S1 have curvature radii different from each other. Thus, from the viewpoint of properly holding the packaging bag 11 with the supply belt 25 and the holding belt 35, the traveling speeds of the supply belt 25 and the holding belt 35 are not necessarily equal to each other and there exists an ideal speed difference (relative speed) corresponding to the thickness of the packaging bag 11 between the traveling speeds of the supply belt 25 and the holding belt 35. The control panel 15 in this embodiment determines the traveling speed of the holding belt 35 based on the traveling speed of the supply belt 25 and the thickness of the packaging bag 11, and controls the holding belt drive unit 40b so that the holding belt 35 travels at the determined traveling speed. Accordingly, in the inversion device 10 of this embodiment, the supply belt 25 and the holding belt 35 are made to travel at ideal traveling speeds, the holding of a packaging bag 11 caused by the holding belt 35 and the supply belt 25 is stabilized, and the inversion process for a packaging bag 11 can be carried out precisely.

### Modification

In the above embodiment, the tension acting on the holding belt 35 is controlled by adjusting the relative position between the supply belt 25 and the holding belt 35 in the inversion section S1 according to the detection result of the status detection sensor 50. However, the method of the control is not limited to this example.

For example, the control panel 15 may control the biasing unit 46 (in particular, the second air cylinder 61) according to the detection result of the status detection sensor 50 and thereby adjust the pressing condition of the pressing unit 45 on the holding belt 35 so that the pressing condition of the holding belt 35 on the supply belt 25 in the inversion section S1 is adjusted. For example, when the detection result of the status detection sensor 50 indicates normality (i.e., indicates that the packaging bag 11 is being transferred without overlapping with any other packaging bags 11), the control panel 15 controls the second air cylinder 61 of the biasing unit 46 so that the holding belt 35 is pressed against the supply belt 25 relatively strongly in the inversion section S1. Namely, the protrusion length of the cylinder shaft 61a from the main body of the second air cylinder 61 is set relatively long at a standard protrusion length. In contrast, when the detection result of the status detection sensor 50 indicates abnormality (i.e., indicates that two or more packaging bags 11 are being transferred in the overlapping state), the control panel 15 controls the second air cylinder 61 of the biasing unit 46 so that the holding belt 35 is pressed against the supply belt 25 relatively weakly in the inversion section S1. Namely, the protrusion length of the cylinder shaft 61a from the main body of the second air cylinder 61 is set relatively short at a length shorter than the standard protrusion length.

As above, by controlling the biasing unit 46 and thereby adjusting the pressing force applied from the pressing unit 45 to the holding belt 35 as above, the pressing force applied from the supply belt 25 and the holding belt 35 to the packaging bag 11 in the inversion section S1 can be optimized and the packaging bag 11 can be appropriately transferred in the inversion section S1. After such packaging bags 11 in the overlapping state are discharged from the inversion section S1, the protrusion length of the cylinder shaft 61a of the second air cylinder 61 is returned to the original length and the biasing force applied from the biasing unit 46 to the pressing unit 45 is also returned to the original magnitude.

In this modification, when two or more packaging bags 11 in the overlapping state are discharged from the inversion section S1, the discharged packaging bags 11 are put on the unloading belt 30 of the unloading unit 29 and sent to the stage next to the inversion device 10. The packaging bags 11 put on the unloading belt 30 in the overlapping state may also be discharged from the transfer line on the downstream side.

### Second Embodiment

In this embodiment, components identical or similar to those of the inversion device 10 according to the above first embodiment are assigned the same reference characters as in the first embodiment and detailed explanation thereof is omitted for brevity.

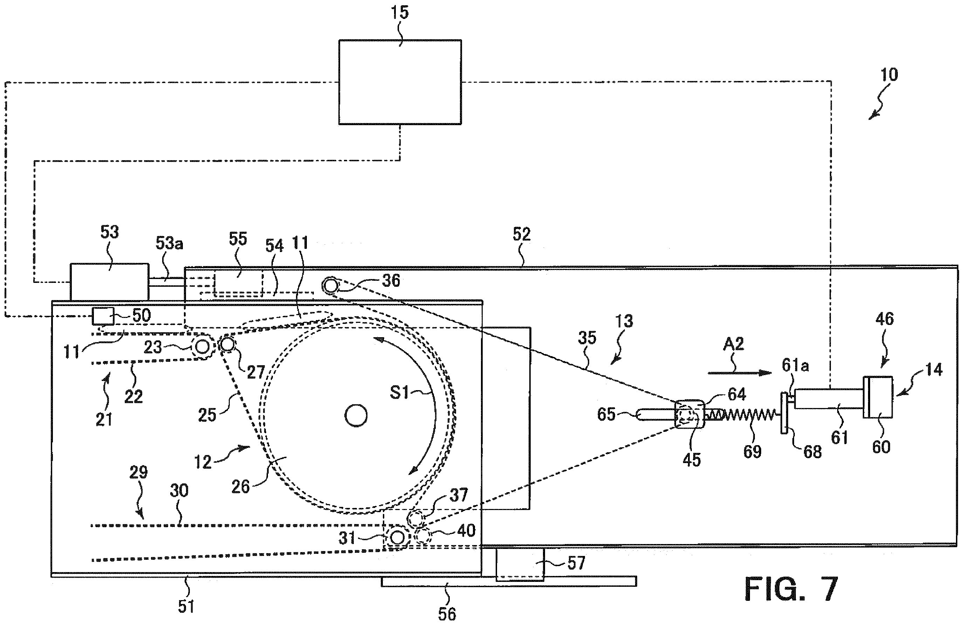

Fig. 7 is a diagram showing an example of the side-view configuration of an inversion device 10 according to a second embodiment, and showing a state when the detection result of the status detection sensor 50 indicates normality.

The transfer holding unit 13 in this embodiment does not include the first turnabout roller 38 and the second turnabout roller 39 (see Fig. 1, for example), which are included in the transfer holding unit 13 in the first embodiment, and the holding belt 35 is supported by the first inversion part roller 36, the second inversion part roller 37 and the pressing unit 45. In other words, the first inversion part roller 36, the second inversion part roller 37 and the pressing unit 45 support an inner surface of the holding belt 35 so that the holding belt 35 can travel, and the holding belt 35 is basically stretched tightly with no slack.

The pressing unit 45 of the tension adjustment unit 14 in this embodiment presses on the holding belt 35 in a direction of getting away from the supply unit 12 (and from the transfer pulley 26 and the supply belt 25). The biasing unit 46 biases the pressing unit 45 and the holding belt 35 in the direction of getting away from the supply unit 12 (and from the transfer pulley 26 and the supply belt 25) (see the arrow "A2" in Fig. 7).

The biasing unit 46 shown in Fig. 7 includes a bracket 60, a second air cylinder 61, a connection member 68, a tension spring 69 and a block 64. The tension spring 69 is stretched and both ends of the tension spring 69 are attached respectively to the block 64 and the connection member 68. Elastic force is applied from the tension spring 69 to the block 64 and the connection member 68 in directions of bringing the block 64 and the connection member 68 close to each other. The block 64 pulled by the tension spring 69 receives force in the direction of getting away from the supply unit 12 and the inversion section S1. Therefore, the pressing unit 45 fixed to the block 64 also receives the pulling force from the tension spring 69 and is biased in the direction of getting away from the supply unit 12 and the inversion section S1. The connection member 68 is provided instead of the pad plate 62 in the first embodiment. The connection member 68 is attached to the tip end of the cylinder shaft 61a of the second air cylinder 61. The arrangement position of the connection member 68 is determined according to the protrusion length of the cylinder shaft 61a from the main body of the second air cylinder 61. The magnitude of the force applied from the tension spring 69 to the block 64 is adjusted according to the protrusion length of the cylinder shaft 61a from the main body of the second air cylinder 61.

Incidentally, when the protrusion length of the cylinder shaft 61a from the main body of the second air cylinder 61 is set at the maximum, the connection member 68 may be arranged at a position where the elastic force (pulling force) applied from the tension spring 69 to the block 64 and the pressing unit 45 weakens and the holding belt 35 slackens

The rest of the configuration is equivalent or similar to that in the inversion device 10 according to the first embodiment.

Also in this embodiment, the tension adjustment unit 14 (including the pressing unit 45 and the biasing unit 46) automatically adjusts the tension of the holding belt 35 according to the size (in particular, the thickness) of a packaging bag 11, and a packaging bag 11 in the inversion section S1 is supported by the supply belt 25 and the holding belt 35 with appropriate holding force. Incidentally, the holding belt 35 is biased towards the supply belt 25 and the position of the pressing unit 45 is determined according to the balance between the tension of the holding belt 35 and the biasing force applied from the biasing unit 46 to the pressing unit 45.

In the first embodiment shown in Fig. 1, etc., the direction in which the holding belt 35 is pressed by the pressing unit 45 (i.e., tension adjustment unit 14) and the direction in which the pressing unit 45 is biased by the biasing unit 46 are substantially the same as the biasing direction of the holding belt 35 in the inversion section S1; however, in this embodiment shown in Fig. 7, the direction in which the holding belt 35 is pressed by the pressing unit 45 and the direction in which the pressing unit 45 is biased by the biasing unit 46 are opposite to the biasing direction of the holding belt 35 in the inversion section S1. As above, the direction in which the holding belt 35 is pressed by the pressing unit 45 and the direction in which the pressing unit 45 is biased by the biasing unit 46 may either coincide or not coincide with the biasing direction of the holding belt 35 in the inversion section S1.

### Third Embodiment

In this embodiment, components identical or similar to those of the inversion device 10 according to the first embodiment are assigned the same reference characters as in the first embodiment and detailed explanation thereof is omitted for brevity.

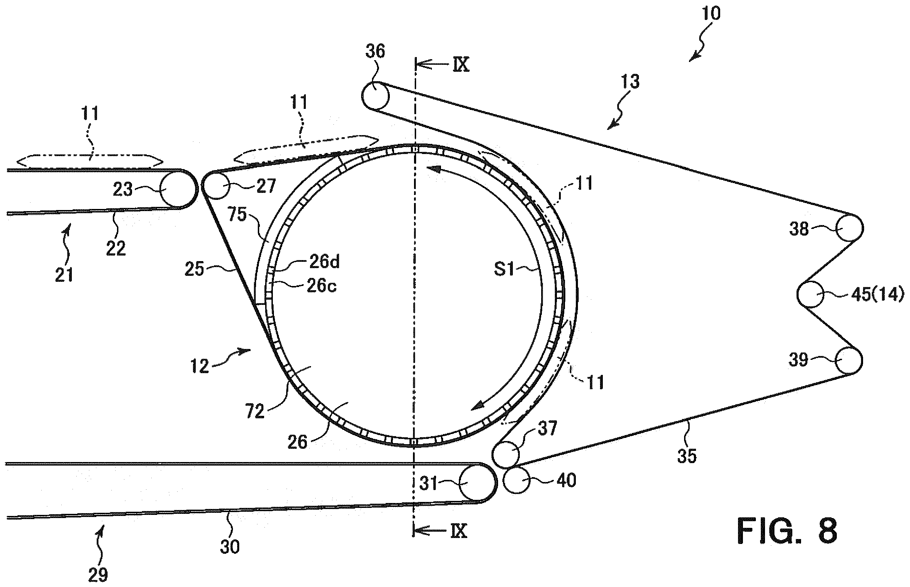

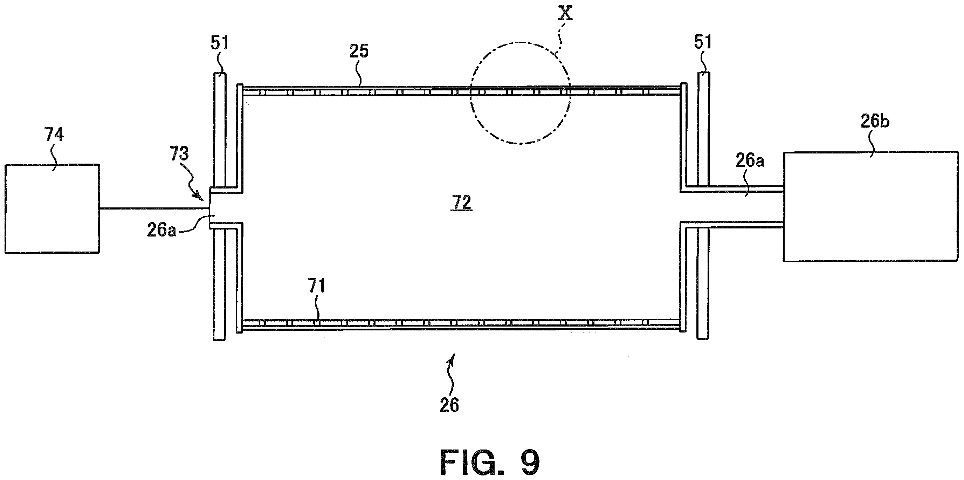

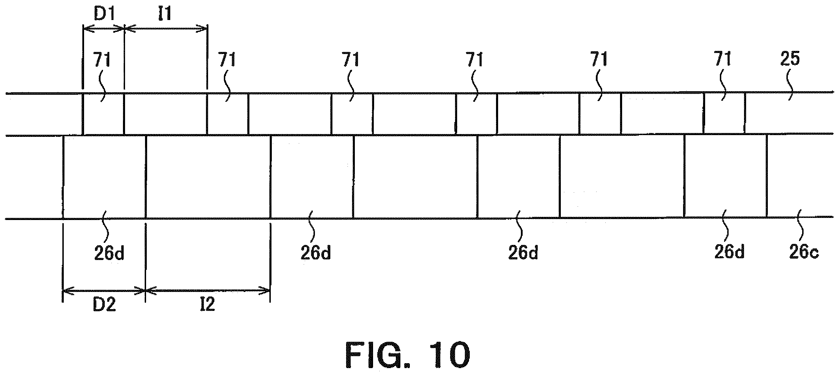

Fig. 8 is a schematic diagram showing a cross-sectional configuration of a principle part of an inversion device 10 according to a third embodiment related to the inversion process, and showing a state in which the packaging bag 11 is held by the supply belt 25 and the holding belt 35 in the inversion section S1. Fig. 9 is a diagram showing a cross-sectional configuration of the transfer pulley 26 along a cross-sectional line IX - IX shown in Fig. 8. Fig. 10 is an enlarged cross-sectional view of a part indicated by the reference character "X" in Fig. 9.

The transfer pulley 26 in this embodiment has a hollow shape and includes a negative pressure chamber 72 and an outer circumferential surface part 26c that supports the supply belt 25 at least in the inversion section S1. The outer circumferential surface part 26c has a plurality of pulley openings 26d communicating with the negative pressure chamber 72. In the outer circumferential surface part 26c of the transfer pulley 26 in this example, a great number of pulley openings 26d are evenly formed substantially throughout the whole area of the outer circumferential surface part 26c. These pulley openings 26d may either be arranged irregularly at uneven intervals or arranged at even intervals.

As shown in Fig. 9, the negative pressure chamber 72 is communicated with a vacuum pump 74 via a connection part 73 formed at one end of the central shaft part 26a of the transfer puiley 26 and the pressure in the negative pressure chamber 72 is maintained in a negative pressure condition lower than the standard atmospheric pressure. To the other end of the central shaft part 26a of the transfer pulley 26, the supply belt drive unit 26b is attached. The supply belt drive unit 26b rotates the central shaft part 26a and thereby rotates the whole of the transfer pulley 26. Each end of the central shaft part 26a of the transfer pulley 26 is arranged to penetrate its corresponding side plate of the first frame 51. The side plates rotatably holds the central shaft part 26a (i.e., transfer pulley 26).

On the other hand, the supply belt 25 configured as an integral web-like flat belt has one or more belt openings 71 (see Fig. 10) that communicate with pulley openings 26d at least in the inversion section S1. In the supply belt 25 in this embodiment, the belt openings 71 are evenly formed substantially throughout the whole area of the supply belt 25. These belt openings 71 may either be arranged irregularly at uneven intervals or arranged at even intervals.

The interval I2 between the pulley openings 26d formed in the outer circumferential surface part 26c of the transfer pulley 26 differs from the interval I1 between the belt openings 71 formed in the supply belt 25 (i.e., I1≠I2). In the example shown in Fig. 10, the belt openings 71 are formed at even intervals, the pulley openings 26d are formed at even intervals, and interval 12 between the pulley openings 26d is greater than the interval I1 between the belt openings 71 (i.e., I2>I1). Further, in the example shown in Fig. 10, the diameter D2 of each pulley opening 26d is greater than the diameter D1 of each belt opening 71 (i.e., D2>D1).

Furthermore, as shown in Fig. 8, at least a part of the non-supporting section where the outer circumferential surface part 26c of the transfer pulley 26 does not support the supply belt 25 in the section where the outer circumferential surface part 26c travels, is provided with a cover member 75 having an inner surface shape corresponding to the outer surface shape of the outer circumferential surface part 26c (in this example, having an inner surface shape having an arc-like cross-sectional shape). The cover member 75 covers the outer circumferential surface part 26c of the transfer pulley 26 and thereby limits ventilation through the pulley openings 26d in the aforementioned non-supporting section. Specifically, the cover member 75 slides on the outer circumferential surface part 26c of the rotating transfer pulley 26 and covers and seals up the pulley openings 26d in the aforementioned non-supporting section.

The rest of the configuration is equivalent or similar to that in the inversion device 10 according to the first embodiment.

In the inversion device 10 of this embodiment, a packaging bag 11 in the inversion section S1 is sucked and held by the supply belt 25 via the pulley openings 26d and the belt openings 71. Accordingly, a packaging bag 11 is held more stably in the inversion section S1.

By holding a packaging bag 11 more stably by use of the negative pressure in the negative pressure chamber 72 as above, it is also possible to reduce the holding force applied from the supply belt 25 and the holding belt 35 to the packaging bag 11 passing through the inversion section S1. For example, even when a packaging bag 11 is of a type not quite suitable for being pressed by the holding belt 35 with relatively strong force, the packaging bag 11 is sucked and held by the supply belt 25 according to the inversion device 10 of this embodiment. Thus, it is possible to weaken the tension of the holding belt 35 and appropriately hold, transfer and invert such a packaging bag 11 with the supply belt 25 and the holding belt 35 in the state of softly pressing the holding belt 35 against the packaging bag 11.

### Fourth Embodiment

In this embodiment, components identical or similar to those of the inversion device 10 according to the above third embodiment are assigned the same reference characters as in the third embodiment and detailed explanation thereof is omitted for brevity.

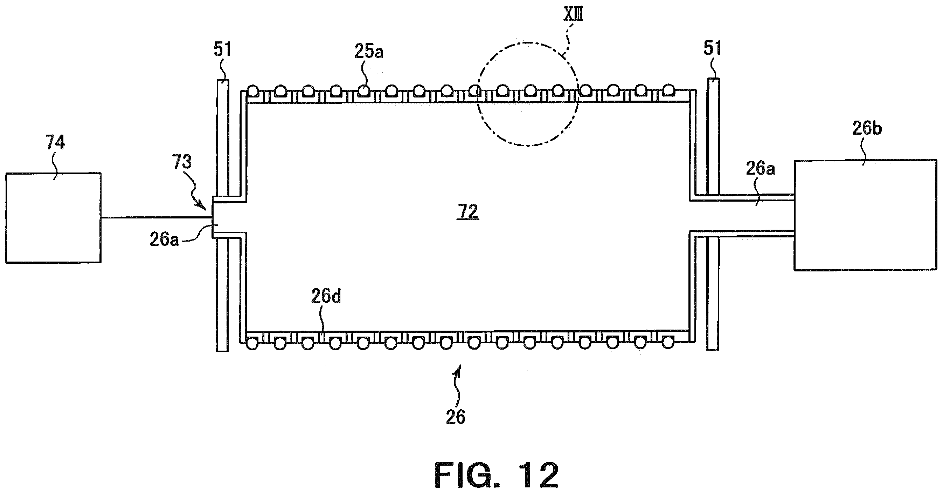

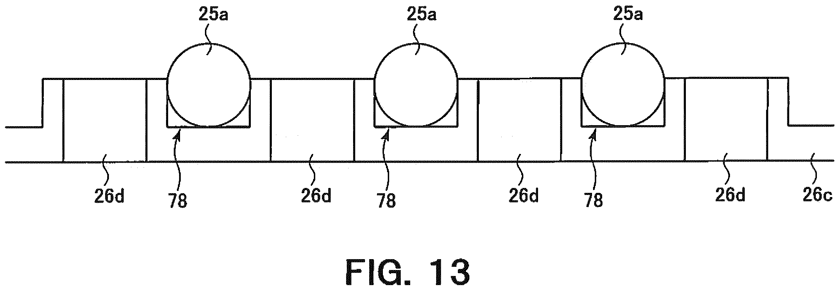

Fig. 11 is a plan view showing a principle part of an inversion device 10 according to a fourth embodiment related to the inversion process viewed from above. Fig. 12 is a diagram showing a cross-sectional configuration of a transfer pulley 26 shown in Fig. 11. Fig. 13 is an enlarged cross-sectional view of a part indicated by the reference character "XIII" in Fig. 12.

In this embodiment, instead of the above-described supply belt 25 formed as a flat belt by use of an integral member, a plurality of linear supply belts 25a, formed of plurality of members arranged separate from each other, are used. In the outer circumferential surface part 26c of the transfer pulley 26, a great number of pulley openings 26d communicating with the negative pressure chamber 72 are formed. As shown in Fig. 13, each pulley opening 26d is arranged between adjoining linear supply belts 25a.

Each linear supply belt 25a has a ring-like shape and fits in a pulley groove part 78 formed between adjoining pulley openings 26d in the outer circumferential surface part 26c of the transfer pulley 26. Each pulley groove part 78 is arranged to extend in the circumferential direction (i.e., rotational direction) of the transfer pulley 26 and to surround the outer circumference of the transfer pulley 26. These pulley groove parts 78 are formed to be separate from each other at even intervals in regard to the extending direction of the central shaft part 26a, and one linear supply belt 25a is arranged in each pulley groove part 78. As above, the supply belt in this embodiment (i.e., the belt supported by the transfer pulley 26 and the supply-side rotary roller 27 to be able to travel) is formed of the linear supply belts 25a arranged separate from each other.

While the cross section of each linear supply belt 25a is in a circular shape in the illustrated example, the cross-sectional shape of the linear supply belt 25a is not particularly limited. For example, the cross section of the linear supply belt 25a may be in a polygonal shape such as a rectangular shape.

The rest of the configuration is equivalent or similar to that in the inversion device 10 according to the third embodiment.

According to the inversion device 10 of this embodiment, a packaging bag 11 in the inversion section S1 is sucked to the supply belt (i.e., the linear supply belts 25a) via the pulley openings 26d and thereby held stably.

Further, in the inversion device 10 of this embodiment, a packaging bag 11 is supported by the linear supply belts 25a each of which is arranged between adjoining pulley openings 26d. Thus, even when liquid drops from a packaging bag 11 being transferred by the linear supply belts 25a, the dropped liquid hardly remains on the linear supply belts 25a. Therefore, a decline in the holding force of the supply belt caused by liquid dropping from a packaging bag 11 and remaining on the supply belt can be prevented, and thus a packaging bag 11 can be supported precisely by the linear supply belts 25a.

### Fifth Embodiment

In this embodiment, not part of the present invention, components identical or similar to those of the inversion device 10 according to the first embodiment are assigned the same reference characters as in the first embodiment and detailed explanation thereof is omitted for brevity.

Figs. 14 and 15 are diagrams showing an example of the side-view configuration of an inversion device 10 according to a fifth embodiment, and Fig. 14 shows a state when the detection result of the status detection sensor 50 indicates normality and Fig. 15 shows a state when the detection result of the status detection sensor 50 indicates abnormality.

The inversion device 10 of this embodiment includes a roller position adjustment mechanism 81 for adjusting the positions of the second inversion part roller 37 and a conveyer position adjustment mechanism 82 for adjusting the positions of the unloading unit 29.

The roller position adjustment mechanism 81 includes a bracket 84 fixed to a side plate of the second frame 52, a third air cylinder 83 attached to the bracket 84, a lever 85 contacting the tip end of a cylinder shaft 83a of the third air cylinder 83, and a pivot shaft part 86 fixed to the side plate of the second frame 52 and pivotably supporting the lever 85. The conveyer position adjustment mechanism 82 includes a bracket 90 fixed to a side plate of the first frame 51, a fourth air cylinder 89 attached to the bracket 90, a lever 91 contacting the tip end of a cylinder shaft 89a of the fourth air cylinder 89, and a pivot shaft 92 fixed to the side plate of the first frame 51 and pivotably supporting the lever 91.

The lever 85 of the roller position adjustment mechanism 81 pivots according to the protrusion length of the cylinder shaft 83a from the main body of the third air cylinder 83. The pivoting attitude of the lever 85 is determined according to the protrusion length of the cylinder shaft 83a. Similarly, the lever 91 of the conveyer position adjustment mechanism 82 pivots according to the protrusion length of the cylinder shaft 89a from the main body of the fourth air cylinder 89. The pivoting attitude of the lever 91 is determined according to the protrusion length of the cylinder shaft 89a.

The second inversion part roller 37 is attached to an end of the lever 85 of the roller position adjustment mechanism 81 on the side not provided with the pivot shaft part 86. The unloading roller 31 is attached to an end of the lever 91 of the conveyer position adjustment mechanism 82 on the side not provided with the pivot shaft 92. In this embodiment, the second inversion part roller 37 pivots together with the lever 85 of the roller position adjustment mechanism 81, while the unloading roller 31 pivots together with the lever 91 of the conveyer position adjustment mechanism 82. Therefore, arrangement positions of the second inversion part roller 37 and the unloading roller 31 are determined according to the pivoting attitudes of the lever 85 of the roller position adjustment mechanism 81 and the lever 91 of the conveyer position adjustment mechanism 82.

The control panel 15 functioning as the transfer control unit controls the third air cylinder 83 of the roller position adjustment mechanism 81 and the fourth air cylinder 89 of the conveyer position adjustment mechanism 82. Specifically, the control panel 15 controls the roller position adjustment mechanism 81 according to the detection result of the status detection sensor 50 and thereby adjusts the position of the second inversion part roller 37 so that a discharge position of a packaging bag 11 discharged from the inversion section S1 is adjusted. Meanwhile, the control panel 15 controls the conveyer position adjustment mechanism 82 according to the detection result of the status detection sensor 50 and thereby adjusts the position of the unloading roller 31 so that the relative position between the inversion section S1 and the unloading roller 31 of the unloading unit 29 is adjusted.

Incidentally, the status detection sensor 50 in this embodiment is arranged in the vicinity of the stopper 66 and detects the position of the stopper 66. To the adjustment shaft 67, the stopper 66 is fixed and the pressing unit 45 is also fixed via the block 64, and thus "the position of the pressing unit 45" and "the position of the stopper 66" have correlation with each other. Therefore, the position of the pressing unit 45 can be detected indirectly by detecting the position of the stopper 66. Further, since "the position of the pressing unit 45" and "the thickness and the number of packaging bags 11 arranged between the supply belt 25 and the holding belt 35" have correlation with each other, "the thickness and the number of packaging bags 11 arranged between the supply belt 25 and the holding belt 35" and "the position of the stopper 66" also have correlation with each other. Therefore, the status detection sensor 50 in this embodiment detects the overlapping status of the packaging bag 11 by indirectly detecting the arrangement position of the pressing unit 45. Incidentally, the status detection sensor 50 may also be configured to detect the overlapping status of packaging bags 11 by directly detecting the pressing unit 45.

The holding belt drive mechanism 40 in this embodiment supports the holding belt 35 by sandwiching the holding belt 35 between the holding belt drive mechanism 40 itself and the second turnabout roller 39, is driven by the holding belt drive unit 40b (see Fig. 6) to rotate, and thereby makes the holding belt 35 travel.

The rest of the configuration is equivalent or similar to that in the inversion device 10 according to the first embodiment.

For example, when the detection result of the status detection sensor 50 indicates normality (i.e., indicates that a packaging bag 11 is being transferred without overlapping with any other packaging bags 11), the control panel 15 controls the roller position adjustment mechanism 81 so as to arrange the second inversion part roller 37 at a position for passing on the packaging bag 11 discharged from the inversion section S1 to the unloading belt 30 of the unloading unit 29. Namely, as shown in Fig. 14, the protrusion length of the cylinder shaft 83a from the main body of the third air cylinder 83 is set at a standard protrusion length and the second inversion part roller 37 is arranged at a position close to the supply belt 25 and the unloading roller 31.

Further, when the detection result of the status detection sensor 50 indicates normality, the control panel 15 controls the conveyer position adjustment mechanism 82 so as to arrange the unloading roller 31 of the unloading unit 29 at a position for receiving the packaging bag 11 discharged from the inversion section S1. Namely, as shown in Fig. 14, the protrusion length of the cylinder shaft 89a from the main body of the fourth air cylinder 89 is set at a standard protrusion length and the unloading roller 31 is arranged at a position close to the supply belt 25 and the second inversion part roller 37.

Therefore, when a packaging bag 11 is transferred without overlapping with any other packaging bags 11 and the detection result of the status detection sensor 50 indicates normality, the packaging bag 11 after being discharged from the inversion section S1 is appropriately put on the unloading belt 30 of the unloading unit 29 and sent to the next stage.

In contrast, when the detection result of the status detection sensor 50 indicates abnormality (i.e., indicates that two or more packaging bags 11 are being transferred in the overlapping state), the control panel 15 controls the roller position adjustment mechanism 81 so as to arrange the second inversion part roller 37 at a position for sending the packaging bags 11 discharged from the inversion section S1 to the outside of the unloading unit 29. Namely, as shown in Fig. 15, the protrusion length of the cylinder shaft 83a from the main body of the third air cylinder 83 is set shorter than the standard protrusion length and the second inversion part roller 37 is arranged at a position apart from the supply belt 25 and the unloading roller 31.

Further, when the detection result of the status detection sensor 50 indicates abnormality, the control panel 15 controls the conveyer position adjustment mechanism 82 so as to arrange the unloading unit 29 at a position for sending the packaging bags 11 discharged from the inversion section S1 to the outside of the unloading belt 30 of the unloading unit 29. Namely, as shown in Fig. 15, the protrusion length of the cylinder shaft 89a from the main body of the fourth air cylinder 89 is set shorter than the standard protrusion length and the unloading roller 31 is arranged at a position apart from the supply belt 25 and the second inversion part roller 37.

Therefore, when two or more packaging bags 11 are transferred in the overlapping state and the detection result of the status detection sensor 50 indicates abnormality, the packaging bags 11 after being discharged from the inversion section S1 are sent to the outside of the unloading unit 29 through the space between the unloading roller 31 and the second inversion part roller 37 and are not sent to the stage next to the inversion device 10. After the packaging bags 11 in the overlapping state have been discharged from the inversion section S1, the protrusion length of the cylinder shaft 83a of the third air cylinder 83 and the protrusion length of the cylinder shaft 89a of the fourth air cylinder 89 are returned to the original lengths, the unloading roller 31 and the second inversion part roller 37 are arranged close to each other again, and thereafter a packaging bag 11 discharged from the inversion section S1 is put on the unloading belt 30.

Incidentally, while an example in which both of the roller position adjustment mechanism 81 and the conveyer position adjustment mechanism 82 operate has been described above, the control panel 15 may also be configured to make one of the roller position adjustment mechanism 81 and the conveyer position adjustment mechanism 82 operate according to the detection result of the status detection sensor 50. For example, when a packaging bag 11 is transferred without overlapping with any other packaging bags 11 and the detection result of the status detection sensor 50 indicates normality, the second inversion part roller 37 and the unloading roller 31 are arranged at positions close to each other. When two or more packaging bags 11 are transferred in the overlapping state and the detection result of the status detection sensor 50 indicates abnormality, it is possible to make only one of the third air cylinder 83 and the fourth air cylinder 89 operate, move only one of the second inversion part roller 37 and the unloading roller 31, and thereby separate the second inversion part roller 37 and the unloading roller 31 from each other.

It is also possible to properly combine some of the above-described embodiments and modifications. For example, the status detection sensor 50 in the fifth embodiment (Fig. 15) may be applied to the inversion devices 10 of the first through fourth embodiments (see Fig. 1, etc., for example), and the status detection sensor 50 in the first through fourth embodiments may be applied to the inversion device 10 of the fifth embodiment.

While the overlapping status of packaging bags 11 is detected by the status detection sensor 50 and the abnormality and normality of the status of packaging bags 11 are determined based on the presence/absence of the overlap of packaging bags 11 in the above-described embodiments and modifications, the abnormality and normality of the status of packaging bags 11 may also be determined based on a condition other than the presence/absence of the overlap. For example, it is possible to have the status detection sensor 50 detect the orientation or attitude of a packaging bag 11 being transferred and have the control panel 15 determine the abnormality and normality of the status of the packaging bag 11 based on whether or not the packaging bag 11 is oriented in an appropriate direction or based on whether or not the packaging bag 11 is being transferred in an appropriate attitude.

In cases where only a particular part (e.g., particular surface) of a packaging bag 11 is processed in a stage after the inversion device 10 (specifically, a stage posterior to the unloading unit 29), the particular part of a packaging bag 11 has to be oriented in a prescribed direction for receiving the processing by the processing device provided in the stage after the inversion device 10. For example, in cases where intensive cleaning of only a particular surface (e.g., bottom surface) of a packaging bag 11 is necessary, a packaging bag 11 is required to be transferred to the position for receiving the cleaning process performed by the cleaning device provided in a stage after the inversion device 10, with the particular surface facing the cleaning device. In such cases, it is possible to have the status detection sensor 50 detect the orientation or attitude of a packaging bag 11 and have the control panel 15 judge that the packaging bag 11 is being transferred in the normal state if the particular part is oriented in the prescribed direction, or that the packaging bag 11 is being transferred in the abnormal state if the particular part is not oriented in the prescribed direction. For example, when the detection result of the status detection sensor 50 indicates normality, that is, when the particular part of a packaging bag 11 is oriented in the prescribed direction, the control panel 15 can control pertinent devices (e.g., the first air cylinder 53, the third air cylinder 83 and/or the fourth air cylinder 89) and thereby discharge the packaging bag 11 onto the unloading belt 30 to cause the unloading belt 30 to send the packaging bag 11 to the next stage. In contrast, when the detection result of the status detection sensor 50 indicates abnormality, that is, when the particular part of a packaging bag 11 is not oriented in the prescribed direction, the control panel 15 can control pertinent devices (e.g., the first air cylinder 53, the third air cylinder 83 and/or the fourth air cylinder 89) and thereby discharge the packaging bag 11 to the outside of the unloading belt 30 so as not to send the packaging bag 11 to the next stage. Thus, only packaging bags 11 transferred in the normal state can receive processing performed in a stage posterior to the inversion device 10.

Incidentally, the specific object of the detection performed by the status detection sensor 50 is not particularly limited; the status of a packaging bag 11 may be detected by having the status detection sensor 50 detect the presence/absence of a packaging bag 11 at a particular position (e.g., height) as described above, or by having the status detection sensor 50 capture an image of a packaging bag 11 and performing image analysis on the captured image data. The analysis of the captured image data may be carried out by either the status detection sensor 50 or the control panel 15 connected to the status detection sensor 50. By detecting the outline (edge) of the packaging bag 11, the orientation or attitude of the packaging bag 11 can be detected. In cases where the status detection sensor 50 performs the image capturing of a packaging bag 11, it is desirable to set the status detection sensor 50 at a position where image capturing of the whole of each transferred packaging bag 11 is possible. For example, the status detection sensor 50 may be set above the loading belt 22 or the supply belt 25 (typically, may be fixed to the top plate of the first frame 51).

## Claims

1. An inversion device (10) comprising:
a supply unit (12) including a supply belt (25) that continuously travels together with a packaging bag (11) in an inversion section (S1) having an arc-like path;
a transfer holding unit (13) including a holding belt (35) that is provided to be able to travel while facing the supply belt (25) in the inversion section (S1) and holds the packaging bag (11) by sandwiching the packaging bag (11) between the holding belt (35) itself and the supply belt (25) traveling in the inversion section (S1);
a tension adjustment unit (14) that adjusts tension of the holding belt (35) in such a manner that the holding belt (35) is pressed against the supply belt (25) in the inversion section (S1); and
an unloading unit (29) that receives the packaging bag (11) discharged from the inversion section (S1), wherein
the tension adjustment unit (14) includes:
a pressing unit (45) that is movable, presses the holding belt (35), and determines the tension of the holding belt (35) according to an arrangement position of the pressing unit (45); and
a biasing unit (46) that biases the pressing unit (45) in a direction which causes increase in the tension of the holding belt (35),
the transfer holding unit (13) includes a plurality of rollers (36, 37, 38, 39) supporting the holding belt (35) to be travelable,
the holding belt (35) is an endless belt; **characterized in that**
the plurality of rollers include a first inversion part roller (36) arranged on an inlet side of the inversion section (S1) and a second inversion part roller (37) arranged on an outlet side of the inversion section (S1),
at least a part of the holding belt (35) between the first inversion part roller (36) and the second inversion part roller (37) faces the supply belt (25) traveling in the inversion section (S1),
the inversion device (10) comprises:
a status detection sensor (50) configured to detect the overlapping status of the packaging bag (11) being transferred in the inversion section (S1) or in a section before the inversion section (S1);
a roller position adjustment mechanism (51, 52, 53, 54, 55, 56, 57) configured to adjust the positions of the first inversion part roller (36) and the second inversion part roller (37); and
a transfer control unit (15) configured to control the roller position adjustment mechanism according to detection result of the status detection sensor (50) so as to adjust the positions of the first inversion part roller (36) and the second inversion part roller (37) in such a manner that a relative position between the supply belt (25) and the holding belt (35) in the inversion section (S1) is adjusted, wherein:
when the detection result of the status detection sensor (50) indicates normality, that a packaging bag (11) is being transferred without overlapping with other packaging bags (11), the transfer control unit (15) controls the roller position adjustment mechanism in such a manner that the holding belt (35) is placed relatively close to the supply belt (25) in the inversion section (S1), and
when the detection result of the status detection sensor (50) indicates abnormality, that two or more packaging bags (11) are being transferred in the overlapping state, the transfer control unit (15) controls the roller position adjustment mechanism in such a manner that the holding belt (35) is placed relatively distant from the supply belt (25) in the inversion section (S1).

2. The inversion device (10) according to claim 1, wherein:
the pressing unit (45) biased by the biasing unit (46) presses a part of the holding belt (35), the part traveling in a section on a side opposite to the inversion section (S1) via the first inversion part roller (36) and the second inversion part roller (37).

3. The inversion device (10) according to claim 1 or 2, wherein the status detection sensor (50) is a sensor configured to sense the packaging bag (11) to detect overlapping status of the packaging bag (11).

4. The inversion device (10) according to claim 1 or 2, wherein:
the arrangement position of the pressing unit (45) changes according to thickness of one or a plurality of the packaging bags (11) sandwiched and held by the supply belt (25) and the holding belt (35) in the inversion section (S1), and
the status detection sensor (50) is a sensor that detects the arrangement position of the pressing unit (45) to detect overlapping status of the packaging bag (11).

5. The inversion device (10) according to any one of claims 1 to 4, further comprising a belt speed control unit (15) configured to determine the traveling speed of the holding belt (35) according to traveling speed of the supply belt (25) and thickness of the packaging bag (11), wherein:
the transfer holding unit (13) includes a holding belt drive unit (40b) that causes the holding belt (35) to travel, and
the belt speed control unit (15) controls the holding belt drive unit (40b) so as to cause the holding belt (35) to travel at the determined traveling speed.

6. The inversion device (10) according to any one of claims 1 to 5, wherein:
the supply unit (12) includes a transfer pulley (26) that rotates while holding the supply belt (25),
the transfer pulley (26) includes a negative pressure chamber (72) and an outer circumferential surface part (26c) that supports the supply belt (25) at least in the inversion section (S1), and has a plurality of pulley openings (26d) communicating with the negative pressure chamber (72), and
the supply belt (25) has one or more belt openings (71) communicating with the pulley openings (26d) in the inversion section (S1).

7. The inversion device (10) according to any one of claims 1 to 5, wherein:
the supply unit (12) includes a transfer pulley (26) that rotates while holding the supply belt (25),
the transfer pulley (26) includes a negative pressure chamber (72) and an outer circumferential surface part (26c) that supports the supply belt (25) at least in the inversion section (S1), and has a plurality of pulley openings (26d) communicating with the negative pressure chamber (72),
the supply belt (25) is formed of a plurality of members arranged separate from each other, and
each of the pulley openings (26d) is arranged between adjoining ones of the members forming the supply belt (25).

8. The inversion device (10) according to claim 6 or 7, wherein:
a section where the outer circumferential surface part (26c) of the transfer pulley (26) travels includes a supporting section where the outer circumferential surface part (26c) supports the supply belt (25) and a non-supporting section where the outer circumferential surface part (26c) does not support the supply belt (25), and
a cover member (75) is provided in such a manner that the cover member (75) covers the outer circumferential surface part (26c) of the transfer pulley (26) in at least a part of the non-supporting section so as to limit ventilation through the pulley openings (26d).

## Patentansprüche

1. Umkehrvorrichtung (10), mit:
einer Zuführeinheit (12), die ein Zuführband (25) enthält, das sich zusammen mit einem Verpackungsbeutel (11) in einem Umkehrabschnitt (S1), der eine bogenartige Bahn hat, kontinuierlich bewegt;
einer Transferhalteeinheit (13), die ein Halteband (35) aufweist, das so vorgesehen ist, dass es bewegbar ist, während es dem Zuführband (25) in dem Umkehrabschnitt (S1) zugewandt ist, und das den Verpackungsbeutel (11) durch Einschließen der Verpackungstasche (11) zwischen dem Halteband (35) selbst und dem Zuführband (25), das sich in dem Umkehrabschnitt (S1) bewegt, hält;
einer Spannungseinstelleinheit (14), die eine Spannung des Haltebands (35) derart einstellt, dass das Halteband (35) in dem Umkehrabschnitt (S1) an das Zuführband (25) gedrückt wird; und
einer Entladeeinheit (29), die den Verpackungsbeutel (11) aufnimmt, der aus dem Umkehrabschnitt (S1) ausgegeben wird, wobei
die Spannungseinstelleinheit (14) aufweist:
eine Druckausübungseinheit (45), die so bewegbar ist, dass sie das Halteband (35) mit Druck beaufschlagt und die Spannung des Haltebands (35) gemäß einer Anordnungsposition der Druckausübungseinheit (45) ermittelt; und
eine Vorspanneinheit (46), die die Druckausübungseinheit (45) in einer Richtung vorspannt, die eine Zunahme der Spannung des Haltebands (35) bewirkt,
wobei die Transferhalteeinheit (13) mehrere Rollen (36, 37, 38, 39) aufweist, die das Halteband (35) so halten, dass es bewegbar ist,
wobei das Halteband (35) ein Endlosband ist,
**dadurch gekennzeichnet, dass**
die mehreren Rollen eine erste Umkehrteilrolle (36), die auf einer Einlassseite des Umkehrabschnitts (S1) angeordnet ist, und eine zweite Umkehrteilrolle (37) aufweisen, die auf einer Auslassseite des Umkehrabschnitts (S1) angeordnet ist,
wobei mindestens ein Teil des Haltebands (35) zwischen der ersten Umkehrteilrolle (36) und der zweiten Umkehrteilrolle (37) dem Zuführband (25), das sich in dem Umkehrabschnitt (S1) bewegt, zugewandt ist,
wobei die Umkehrvorrichtung (10) aufweist:
einen Statuserfassungssensor (50), der ausgebildet ist, den überlappenden Status des Verpackungsbeutels (11), der in dem Umkehrabschnitt (S1) oder in einem Abschnitt vor dem Umkehrabschnitt (S1) überführt wird, zu erkennen;
einen Rollenpositionseinstellmechanismus (51, 52, 53, 54, 55, 56, 57), der ausgebildet ist, die Positionen der ersten Umkehrteilrolle (36) und der zweiten Umkehrteilrolle (37) einzustellen; und
eine Transfersteuereinheit (15), die ausgebildet ist, den Rollenpositionseinstellmechanismus entsprechend einem Erfassungsergebnis des Statuserfassungssensors (50) so zu steuern, dass die Positionen der ersten Umkehrteilrolle (36) und der zweiten Umkehrteilrolle (37) derart eingestellt werden, dass eine relative Position zwischen dem Zuführband (25) und dem Halteband (35) in dem Umkehrabschnitt (S1) eingestellt wird, wobei:
wenn das Erfassungsergebnis des Statuserfassungssensors (50) einen normalen Status anzeigt, wonach der Verpackungsbeutel (11) ohne Überlappung mit anderen Verpackungsbeuteln (11) überführt wird, die Transfersteuereinheit (15) den Rollenpositionseinstellmechanismus derart steuert, dass das Halteband (35) in dem Umkehrabschnitt (S1) relativ nahe an dem Zuführband (25) angeordnet wird, und
wenn das Erfassungsergebnis des Statuserfassungssensors (50) einen von der Norm abweichenden Status anzeigt, wonach zwei oder mehr Verpackungsbeutel (11) im überlappenden Zustand überführt werden, die Transfersteuereinheit (15) den Rollenpositionseinstellmechanismus derart steuert, dass das Halteband (35) in dem Umkehrabschnitt (S1) relativ weit entfernt von dem Zuführband (25) angeordnet wird.

2. Umkehrvorrichtung (10) nach Anspruch 1, wobei:
die Druckausübungseinheit (45), die durch die Vorspanneinheit (46) vorgespannt ist, einen Teil des Haltebands (35) mit Druck beaufschlagt, wobei der Teil in einem Abschnitt auf einer Seite gegenüberliegend zu dem Umkehrungsabschnitt (S1) mittels der ersten Umkehrteilrolle (36) und der zweiten Umkehrteilrolle (37) bewegt wird,.

3. Umkehrvorrichtung (10) nach Anspruch 1 oder 2, wobei der Statuserfassungssensor (50) ein Sensor ist, der ausgebildet ist, den Verpackungsbeutel (11) so zu erfassen, dass ein überlappender Status des Verpackungsbeutels (11) erkannt wird.

4. Umkehrvorrichtung (10) nach Anspruch 1 oder 2, wobei:
die Anordnungsposition der Druckausübungseinheit (45) sich entsprechend einer Dicke eines oder mehrerer der Verpackungsbeutel (11) ändert, der bzw. die zwischen dem Zuführband (25) und dem Halteband (35) in dem Umkehrabschnitt (S1) eingeschlossen ist bzw. sind und dadurch gehalten wird bzw. werden, und
der Statuserfassungssensor (50) ein Sensor ist, der die Anordnungsposition der Druckausübungseinheit (45) zum Erkennen eines überlappenden Status des Verpackungsbeutels (11) erfasst.

5. Umkehrvorrichtung (10) nach einem der Ansprüche 1 bis 4, ferner mit einer Bandgeschwindigkeitssteuereinheit (15), die ausgebildet ist, die Bewegungsgeschwindigkeit des Haltebands (35) gemäß einer Bewegungsgeschwindigkeit des Zuführbands (25) und einer Dicke des Verpackungsbeutels (11) zu ermitteln, wobei:
die Transferhalteeinheit (13) eine Haltebandantriebseinheit (40b) aufweist, die bewirkt, dass sich das Halteband (35) bewegt, und
die Bandgeschwindigkeitssteuereinheit (15) die Haltebandantriebseinheit (40b) derart steuert, dass bewirkt wird, dass das Halteband (35) sich mit der ermittelten Bewegungsgeschwindigkeit bewegt.

6. Umkehrvorrichtung (10) nach einem der Ansprüche 1 bis 5, wobei:
die Zuführeinheit (12) eine Transferriemenscheibe (26) aufweist, die sich dreht, während sie das Zuführband (25) hält,
die Transferriemenscheibe (26) eine Unterdruckkammer (27) und ein Außenumfangsflächenteil (26c), das das Zuführband (25) zumindest in dem Umkehrabschnitt (S1) hält, und mehrere Riemenscheibenöffnungen (26d) aufweist, die mit der Unterdruckkammer (72) in Verbindung stehen, und
das Zuführband (25) eine oder mehrere Bandöffnungen (71) hat, die mit den Riemenscheibenöffnungen (26d) in dem Umkehrabschnitt (S1) in Verbindung stehen.

7. Umkehrvorrichtung (10) nach einem der Ansprüche 1 bis 5, wobei:
die Zuführeinheit (12) eine Transferriemenscheibe (26) aufweist, die sich dreht, während sie das Zuführband (25) hält,
wobei die Transferriemenscheibe (26) eine Unterdruckkammer (72) und ein Außenumfangsflächenteil (26c), das das Zuführband (25) zumindest in dem Umkehrabschnitt (S1) hält, aufweist und mehrere Riemenscheibenöffnungen (26d) hat, die mit der Unterdrucckammer (72) in Verbindung stehen,
das Zuführband (25) aus mehreren Gliedern aufgebaut ist, die getrennt voneinander angeordnet sind, und
jede der Riemenscheibenöffnungen (26d) zwischen angrenzenden Gliedern, die das Zuführband (25) bilden, angeordnet ist.

8. Umkehrvorrichtung (10) nach Anspruch 6 oder 7, wobei:
ein Abschnitt, in welchem sich das Außenumfangsflächenteil (26c) der Transferriemenscheibe (26) bewegt, einen Halteabschnitt, in welchem das Außenumfangsflächenteil (26c) das Zuführband (25) hält, und einen nicht-haltenden Abschnitt aufweist, in welchem das Außenumfangsflächenteil (26c) das Zuführband (25) nicht hält, und
ein Abdeckelement (75) derart vorgesehen ist, dass das Abdeckelement (75) das Außenumfangsflächenteil (26c) der Transferriemenscheibe (26) zumindest in einem Teil des nicht-haltenden Abschnitts derart abdeckt, dass eine Belüftung durch die Riemenscheibenöffnungen (26d) begrenzt ist.

## Revendications

1. Dispositif d'inversion (10) comprenant :
une unité d'alimentation (12) comprenant une courroie d'alimentation (25) qui se déplace de manière continue conjointement avec un sac d'emballage (11) dans une section d'inversion (S1) ayant une trajectoire en forme d'arc ;
une unité de support de transfert (13) comprenant une courroie de support (35) qui est prévue pour pouvoir se déplacer tout en faisant face à la courroie d'alimentation (25) dans la section d'inversion (S1) et supporte le sac d'emballage (11) en prenant en sandwich le sac d'emballage (11) entre la courroie de support (35) elle-même et la courroie d'alimentation (25) se déplaçant dans la section d'inversion (S1) ;
une unité d'ajustement de tension (14) qui ajuste la tension de la courroie de support (35) de sorte que la courroie de support (35) est comprimée contre la courroie d'alimentation (25) dans la section d'inversion (S1) ; et
une unité de décharge (29) qui reçoit le sac d'emballage (11) déchargé de la section d'inversion (S1), dans lequel
l'unité d'ajustement de tension (14) comprend :
une unité de pression (45) qui est mobile, comprime la courroie de support (35) et détermine la tension de la courroie de support (35) selon une position d'agencement de l'unité de pression (45) ; et
une unité de sollicitation (46) qui sollicite l'unité de pression (45) dans une direction qui provoque l'augmentation de tension de la courroie de support (35),
l'unité de support de transfert (13) comprend une pluralité de rouleaux (36, 37, 38, 39) supportant la courroie de support (35) pour pouvoir se déplacer,
la courroie de support (35) est une courroie sans fin ; **caractérisé en ce que**
la pluralité de rouleaux comprend un premier rouleau de partie d'inversion (36) agencé sur un côté d'entrée de la section d'inversion (S1) et un second rouleau de partie d'inversion (37) agencé sur un côté de sortie de la section d'inversion (S1),
au moins une partie de la courroie de support (35) entre le premier rouleau de partie d'inversion (36) et le second rouleau de partie d'inversion (37) fait face à la courroie d'alimentation (25) se déplaçant dans la section d'inversion (S1),
le dispositif d'inversion (10) comprend :
un capteur de détection d'état (50) configuré pour détecter l'état de chevauchement du sac d'emballage (11) qui est transféré dans la section d'inversion (S1) ou dans une section avant la section d'inversion (S1) ;
un mécanisme d'ajustement de position de rouleau (51, 52, 53, 54, 55, 56, 57) configuré pour ajuster les positions du premier rouleau de partie d'inversion (36) et du second rouleau de partie d'inversion (37) ; et
une unité de commande de transfert (15) configurée pour commander le mécanisme d'ajustement de position de rouleau selon le résultat de détection du capteur de détection d'état (50) afin d'ajuster les positions du premier rouleau de partie d'inversion (36) et du second rouleau de partie d'inversion (37) de sorte qu'une position relative entre la courroie d'alimentation (25) et la courroie de support (35) dans la section d'inversion (S1) est ajustée, dans lequel :
lorsque le résultat de détection du capteur de détection d'état (50) indique la normalité, **en ce qu'**un sac d'emballage (11) est transféré sans chevauchement par rapport aux autres sacs d'emballage (11), l'unité de commande de transfert (15) commande le mécanisme d'ajustement de position de rouleau de sorte que la courroie de support (35) est placée relativement proche de la courroie d'alimentation (25) dans la section d'inversion (S1), et
lorsque le résultat de détection du capteur de détection d'état (50) indique une anomalie, **en ce que** deux sacs d'emballage (11) sont transférés à l'état de chevauchement, l'unité de commande de transfert (15) commande le mécanisme d'ajustement de position de rouleau de sorte que la courroie de support (35) est placée relativement à distance de la courroie d'alimentation (25) dans la section d'inversion (S1).

2. Dispositif d'inversion (10) selon la revendication 1, dans lequel :
l'unité de pression (45) sollicitée par l'unité de sollicitation (46) comprime une partie de la courroie de support (35), la partie se déplaçant dans une section sur un côté opposé à la section d'inversion (S1) via le premier rouleau de partie d'inversion (36) et le second rouleau de partie d'inversion (37).

3. Dispositif d'inversion (10) selon la revendication 1 ou 2, dans lequel le capteur de détection d'état (50) est un capteur configuré pour détecter le sac d'emballage (11) afin de détecter l'état de chevauchement du sac d'emballage (11).

4. Dispositif d'inversion (10) selon la revendication 1 ou 2, dans lequel :
la position d'agencement de l'unité de pression (45) change selon l'épaisseur de l'un ou d'une pluralité de sacs d'emballage (11) pris en sandwich et maintenus sur la courroie d'alimentation (25) et la courroie de support (35) dans la section d'inversion (S1), et
le capteur de détection d'état (50) est un capteur qui détecte la position d'agencement de l'unité de pression (45) afin de détecter l'état de chevauchement du sac d'emballage (11).

5. Dispositif d'inversion (10) selon l'une quelconque des revendications 1 à 4, comprenant en outre une unité de commande de vitesse de courroie (15) configurée pour déterminer la vitesse de déplacement de la courroie de support (35) selon la vitesse de déplacement de la courroie d'alimentation (25) et l'épaisseur du sac d'emballage (11), dans lequel :
l'unité de support de transfert (13) comprend une unité d'entraînement de courroie de support (40b) qui provoque le déplacement de la courroie de support (35), et
l'unité de commande de vitesse de courroie (15) commande l'unité d'entraînement de courroie de support (40b) afin de provoquer le déplacement de la courroie de support (35) à la vitesse de déplacement déterminée.

6. Dispositif d'inversion (10) selon l'une quelconque des revendications 1 à 5, dans lequel :
l'unité d'alimentation (12) comprend une poulie de transfert (26) qui tourne tout en supportant la courroie d'alimentation (25),
la poulie de transfert (26) comprend une chambre de pression négative (72) et une partie de surface circonférentielle externe (26c) qui supporte la courroie d'alimentation (25) au moins dans la section d'inversion (S1), et a une pluralité d'ouvertures de poulie (26d) communiquant avec la chambre de pression négative (72), et
la courroie d'alimentation (25) a une ou plusieurs ouvertures de courroie (71) communiquant avec les ouvertures de poulie (26d) dans la section d'inversion (S1) .

7. Dispositif d'inversion (10) selon l'une quelconque des revendications 1 à 5, dans lequel :
l'unité d'alimentation (12) comprend une poulie de transfert (26) qui tourne tout en supportant la courroie d'alimentation (25),
la poulie de transfert (26) comprend une chambre de pression négative (72) et une partie de surface circonférentielle externe (26c) qui supporte la courroie d'alimentation (25) au moins dans la section d'inversion (S1) et a une pluralité d'ouvertures de poulie (26d) communiquant avec la chambre de pression négative (72),
la courroie d'alimentation (25) est formée avec une pluralité d'éléments agencés séparément les uns des autres, et
chacune des ouvertures de poulie (26d) est agencée entre des éléments attenants des éléments formant la courroie d'alimentation (25).

8. Dispositif d'inversion (10) selon la revendication 6 ou 7, dans lequel :
une section où la partie de surface circonférentielle externe (26c) de la poulie de transfert (26) se déplace, comprend une section de support où la partie de surface circonférentielle externe (26c) supporte la courroie d'alimentation (25) et une section sans support où la partie de surface circonférentielle externe (26c) ne supporte pas la courroie d'alimentation (25), et
un élément de couvercle (75) est prévu de sorte que l'élément de couvercle (75) recouvre la partie de surface circonférentielle externe (26c) de la poulie de transfert (26) dans au moins une partie de la section sans support afin de limiter la ventilation à travers les ouvertures de poulie (26d).
